# EUROPÄISCHE PATENTSCHRIFT

(11) **EP 3 277 977 B1**
(45) Veröffentlichungstag und Bekanntmachung des Hinweises auf die Patenterteilung: **08.05.2019**
(21) Anmeldenummer: 16709776.5
(22) Anmeldetag: 11.03.2016
(51) Int. Cl.: F16F 9/54

(54) **AXIALDÄMPFER**
AXIAL DAMPER
AMORTISSEUR AXIAL

(30) Priorität: 02.04.2015 DE 102015105181
(43) Veröffentlichungstag der Anmeldung: 07.02.2018
(73) Patentinhaber: Lisega SE, 27404 Zeven (DE)
(72) Erfinder: SCHMIDT, Gunnar, 27404 Elsdorf/Frankenbostel (DE); LANGE, Heinz-Wilhelm, 27404 Zeven (DE)
(74) Vertreter: Lippert Stachow Patentanwälte Rechtsanwälte
(86) Internationale Anmeldenummer: PCT/EP2016/055302
(87) Internationale Veröffentlichungsnummer: WO 2016/156016

(56) Entgegenhaltungen:
- EP-A2- 1 803 964
- WO-A1-96/19682
- WO-A1-2009/028941
- DE-A1- 3 041 878
- DE-A1- 19 943 903
- DE-A1-102006 016 701

## Beschreibung

Die Erfindung betrifft eine Dämpfungseinrichtung zur Montage zwischen zwei separaten Bauelementen zum Dämpfen von Schwingungen zwischen den Bauelementen gemäß dem Oberbegriff von Anspruch 1.

Gattungsgemäße Dämpfungseinrichtungen werden zum Dämpfen von Krafteinwirkungen, wie beispielsweise Kraftstößen, auf Bauelemente eingesetzt. Beispielsweise werden gattungsgemäße Dämpfungseinrichtungen im Rohrleitungsbau eingesetzt, um Schwingungen von Rohrleitungen gegenüber anderen Bauelementen, wie beispielsweise einem Gebäude, zu dämpfen. Beispielsweise werden gattungsgemäße Dämpfungseinrichtungen zum Dämpfen von Schwingungen von Maschinenteilen gegenüber einem Maschinengehäuse eingesetzt. Beispielsweise werden gattungsgemäße Dämpfungseinrichtungen zum Dämpfen von Schwingungen zwischen Bauelementen von Gebäuden eingesetzt, die beispielsweise bei Erdbeben auftreten können. Dabei weisen gattungsgemäße Dämpfungseinrichtungen stets einen Axialdämpfer auf, der zwei in axialer Richtung voneinander beabstandete Anschlusselemente aufweist, die über einen axial zwischen den beiden Anschlusselementen angeordneten Dämpfungsabschnitt so verbunden sind, dass sie eine axiale Relativbewegung zueinander ausführen können, wobei der Dämpfungsabschnitt die axialen Relativbewegungen auf einen Verschiebebereich begrenzt und in axialer Richtung dämpft.

Je nach Anwendungsgebiet existieren verschiedene Ausführungsformen solcher Axialdämpfer. Beispielsweise sind solche Axialdämpfer als Hydraulikdämpfer, Wirbelstromdämpfer, Viskosedämpfer oder Feststoffdämpfer ausgebildet. Die beispielhaft genannten Axialdämpfer unterscheiden sich jeweils in ihrer Funktionsweise, mit der ihr Dämpfungsabschnitt die axiale Relativbewegung der beiden Anschlusselemente zueinander dämpft. Dabei sind jedoch sämtliche Axialdämpfer so ausgebildet, dass sie zwar eine Relativbewegung in axialer Richtung der Anschlusselemente zueinander innerhalb des Verschiebebereichs zulassen, wohingegen sie sich in sämtlichen Richtungen senkrecht zur axialen Richtung starr verhalten. Eine relative Krafteinwirkung zwischen erstem und zweitem Anschlusselement senkrecht zur axialen Richtung bringt somit stets eine ungewollte Belastung des Axialdämpfers mit sich, da der Axialdämpfer bestimmungsgemäß nur zum Zulassen einer Relativbewegung in axialer Richtung ausgelegt ist.

Da es bei dem zweckgemäßen Einsatz gattungsgemäßer Dämpfungseinrichtungen zwischen zwei axial voneinander beabstandeten Bauelementen zu Lageveränderungen der Bauelemente senkrecht zur axialen Richtung kommen kann, müssen gattungsgemäße Dämpfungseinrichtungen Mittel aufweisen, über die eine übermäßige Belastung des Axialdämpfers senkrecht zur axialen Richtung verhindert werden kann. Üblicherweise werden diese Mittel dadurch bereitgestellt, dass der Axialdämpfer mit seinen Anschlusselementen nicht unmittelbar und starr an die beiden Bauelemente angeschlossen wird, sondern dass Gelenklager oder Kugelgelenke an den Anschlusselementen des Axialdämpfers vorgesehen werden, über die die Anschlusselemente an jeweils ein Bauelement angeschlossen werden. Dabei sind die Gelenklager bzw. Kugelgelenke so zum Axialdämpfer ausgerichtet angeordnet, dass der Radius des Kreisrings eines Gelenklagers bzw. der Radius der Kugel eines Kugelgelenks parallel zur axialen Richtung des Axialdämpfers bzw. der Dämpfungseinrichtung ausgerichtet ist, so dass eine Gelenkigkeit senkrecht zur axialen Richtung gegeben ist. Über die Gelenklager kann eine Anbindung vom Anschlusselement an das zugeordnete Bauelement so erfolgen, dass ein Verkippen von Anschlusselement zum Bauelement um eine Rotationsachse senkrecht zur axialen Richtung ermöglicht ist. Über ein Kugelgelenk kann ein Verkippen von Anschlusselement und angeschlossenem Bauelement um eine Vielzahl an Rotationsachsen ermöglicht sein.

Herkömmliche Dämpfungseinrichtungen, bei denen ein Axialdämpfer über Gelenklager oder Kugelgelenke an den beiden Bauelementen angeschlossen ist, weisen konstruktionsbedingt erhebliche Nachteile auf. Konstruktionsbedingt weisen die Lager stets ein gewisses Lagerspiel in radialer Richtung des Lagers und somit in axialer Richtung der Dämpfungseinrichtung auf. So weisen Gelenklager konstruktionsbedingt stets eine radiale Lagerluft zwischen den Lagerringen auf. Darüber hinaus kann je nach Passung des Lagerbolzens, insbesondere bei zylindrischen Lagerbolzen, zum Lagerinnenring ein radiales Spiel vorhanden sein. Gattungsgemäße Dämpfungseinrichtungen werden bestimmungsgemäß in axialer Richtung zwischen zwei Bauelementen vorgesehen, die in axialer Richtung Relativbewegungen, üblicherweise Schwingungen oder Stoßbewegungen, ausführen, wobei bestimmungsgemäß die Dämpfungseinrichtungen zum Dämpfen dieser axialen Relativbewegung der Bauelemente eingesetzt werden. Das Vorsehen von Gelenklagern oder Kugelgelenken in gattungsgemäßen Dämpfungseinrichtungen bringt dabei stets mit sich, dass bei jeder axialen Relativbewegung in den Gelenklagern bzw. Kugelgelenken radiale Stöße auftreten. Diese radialen Stöße in den Gelenklagern bzw. Kugelgelenken, die bei dem bestimmungsgemäßen Einsatz der Dämpfungseinrichtungen zwangsläufig auftreten, führen zu einer starken Belastung der Gelenklager bzw. Kugelgelenke. Insbesondere führen die Stöße zu einer fortlaufenden Vergrößerung des Lagerspiels. Die ist zum einen in Dämpfungseinrichtungen prinzipiell unerwünscht, da Dämpfungseinrichtungen auf axiale Relativbewegungen der Bauelemente zueinander möglichst umgehend ansprechen sollen, damit die Relativbewegungen umgehend gedämpft werden können. Dabei ist zu berücksichtigen, dass gattungsgemäße Dämpfungseinrichtungen üblicherweise meist zum Dämpfen von axialen Relativbewegungen von Bauelementen im Bereich von wenigen Millimetern relativ zueinander eingesetzt werden. Zum anderen führt ein zunehmendes Vergrößern des Lagerspiels zwangsläufig zu einer Zerstörung der Lager und damit zu einer Fehlfunktion der gesamten Dämpfungseinrichtung. Darüber hinaus bringt das Vorsehen von Gelenklagern oder Kugelgelenken in den Dämpfungseinrichtungen hohe Kosten mit sich. Ferner ist in dem Stand der Technik aus dem Dokument DE 10 2006 016 701 A1 bekannt, einen schwingungsdämpfendes Kolben-Zylinder-Aggregat über ein Befestigungsteil an einer Radaufhängung eines Fahrzeugs zu befestigen, wobei dieses Befestigungsteil einen Boden, einen Schaft und eine Gabel aufweist und die Mittenachsen des Bodens und der Gabel auf einer gemeinsamen Achse liegen und die Mittenachse des Schaftes im Abstand parallel zu der gemeinsamen Achse verlaufend angeordnet ist. Hierüber ist dem Befestigungsteil eine Ausknickrichtung vorgegeben, damit bei dem Auftreten einer übermäßigen Belastung keine anderen Fahrzeugteile sondern lediglich das Befestigungsteil in seiner Ausknickrichtung eine bleibende Verformung und somit eine Beschädigung erfährt. Das Dokument DE 10 2006 016 701 A1 zeigt einen Axialdämpfer mit den Merkmalen des Oberbegriffs des Anspruchs 1.

Ferner ist in dem Stand der Technik aus dem Dokument EP 1 803 964 A2 ein Lager zur Schwingungsisolation von verschiedenen zueinander beweglichen Maschinenelementen bekannt. Das Lager umfasst einen Axialdämpfer, der an seinen beiden axialen Enden jeweils mit einem Drehgelenk verbunden ist zum Verringern der horizontalen Steifigkeit des Lagers.

Der vorliegenden Erfindung liegt die Aufgabe zugrunde, eine Dämpfungseinrichtung bereitzustellen, die möglichst einfach und kostengünstig herstellbar ist und insbesondere zumindest einen der oben beschriebenen Nachteile herkömmlicher Dämpfungseinrichtungen behebt.

Als eine Lösung der genannten der Erfindung zugrundeliegenden Aufgabe schlägt die Erfindung eine Dämpfungseinrichtung mit den Merkmalen von Anspruch 1 vor. Die erfindungsgemäße Dämpfungseinrichtung ist zur Montage zwischen zwei separaten Bauelementen zum Dämpfen von Schwingungen zwischen den Bauelementen ausgebildet. Die Dämpfungseinrichtung umfasst einen Axialdämpfer, der ein erstes Anschlusselement und ein zweites Anschlusselement aufweist. Über das erste Anschlusselement ist der Axialdämpfer an ein erstes Bauelement anschließbar, über das zweite Anschlusselement an ein zweites Bauelement. Das erste Anschlusselement ist mit dem zweiten Anschlusselement über einen Dämpfungsabschnitt verbunden unter Gewährleistung einer axialen Relativbewegung der beiden Anschlusselemente zueinander, wobei der Dämpfungsabschnitt zum Dämpfern der axialen Relativbewegung zwischen den Anschlusselementen ausgebildet ist. Der Axialdämpfer der erfindungsgemäßen Dämpfungseinrichtung umfasst somit die beiden Anschlusselemente und den Dämpfungsabschnitt. Der Dämpfungsabschnitt ist axial, d. h. in axialer Richtung, zwischen dem ersten und dem zweiten Anschlusselement angeordnet. Das erste Anschlusselement ist an einer axialen Seite des Dämpfungsabschnitts und das zweite Anschlusselement an der anderen axialen Seite des Dämpfungsabschnitts angeordnet. Dabei kann die axiale Erstreckung des Dämpfungsabschnitts variabel sein. Der Dämpfungsabschnitt verbindet somit die beiden Anschlusselemente unter Gewährleistung einer axialen Verschiebbarkeit, insbesondere einer axialen Verschiebbarkeit innerhalb eines axialen Verschiebebereichs, der beiden Anschlusselemente zueinander. Erfindungsgemäß umfasst die Dämpfungseinrichtung ein Biegegelenk, das an einem der Anschlusselemente befestigt ist. Das Biegegelenk weist ein Montageelement zur Montage an einem der beiden Bauelemente auf. Ferner weist das Biegegelenk einen Gelenkabschnitt auf, der als in sich starr zusammenhängendes Bauteil ausgebildet ist und sich axial zwischen dem an dem Biegegelenk befestigten Anschlusselement und dem Montageelement erstreckt, wobei das Biegegelenk in seinem Gelenkabschnitt um zumindest eine Rotationsachse, die senkrecht auf der axialen Richtung steht, elastisch biegbar, ist, wobei der Gelenkabschnitt zumindest einen axialen Biegeabschnitt aufweist, dem genau eine Rotationsachse senkrecht zur axialen Richtung zugeordnet ist und der sich gegenüber einer Biegebelastung, die durch eine an seinen axialen Enden anliegende relative Kraft mit einer Kraftrichtung entlang seiner Rotationsachse auf ihn wirkt, starr verhält, wobei der Biegeabschnitteine Form nach Art einer Platte aufweist, deren flächige Erstreckung durch die axiale Richtung und durch die ihm zugeordnete Rotationsachse festgelegt ist, wobei der Biegeabschnitt eine Erstreckungslänge in einer Richtung senkrecht zur axialen Richtung und senkrecht zu der dem Biegeabschnitt zugeordneten Rotationsachse aufweist, die weniger als 5 % der axialen Erstreckungslänge des Biegeabschnitts beträgt, und wobei der Biegeabschnitt eine Erstreckungslänge entlang der ihm zugeordneten Rotationsachse aufweist, die mindestens das Vierfache der Erstreckungslänge des Biegeabschnitts in der Richtung beträgt, die senkrecht zu der ihm zugeordneten Rotationsachse und senkrecht zur axialen Richtung steht, wobei der Gelenkabschnitt des Biegegelenks aus Vollmaterial besteht.

In einer Ausführungsform ist der Gelenkabschnitt als ein integral einstückiges Element hergestellt. In einer Ausführungsform ist der Gelenkabschnitt aus mehreren einzelnen Elementen hergestellt, die zur Herstellung des Gelenkabschnitts starr miteinander verbunden sind, beispielsweise durch stoffschlüssiges Verbinden, wie beispielsweise Verschweißen oder durch kraftschlüssiges Verbinden, beispielsweise durch festes Verschrauben der einzelnen Elemente zueinander. Der aus Vollmaterial bestehende Gelenkabschnitt kann somit aus mehreren einzelnen, jeweils aus Vollmaterial bestehenden Elementen hergestellt sein. Die starre Verbindung der einzelnen Elemente ist dabei bevorzugt so ausgebildet, dass an den Verbindungsstellen, an denen die Elemente miteinander verbunden sind, keine Relativbewegung der Elemente zueinander möglich ist, so dass sie an ihren Verbindungsstellen positionsfest miteinander verbunden sind, so dass während des bestimmungsgemäßen Betriebs der Dämpfungseinrichtung nur unter Beschädigung der Dämpfungseinrichtung eine Relativbewegung der Elemente zueinander an ihren Verbindungsstellen möglich ist. Somit erfolgt bei einer axialen Relativbewegung der Bauelemente, die über die erfindungsgemäße Dämpfungseinrichtung miteinander verbunden sind, jedenfalls so lange keine axiale Relativbewegung der einzelnen Elemente des Gelenkabschnitts an ihren Verbindungsstellen zueinander, wie die Relativbewegung mit einer Verschiebung innerhalb des axialen Verschiebebereichs des Axialdämpfers, und damit innerhalb des funktionalen Dämpfungsbereichs des Axialdämpfers, einhergeht. Entsprechend ist bei dem Vorsehen einer kraftschlüssigen Verbindung zwischen den Elementen somit ein entsprechend starker Kraftschluss vorgesehen, der eine Relativbewegung der Elemente an ihren Verbindungsstellen innerhalb des funktionalen Dämpfungsbereichs des Axialdämpfers verhindert. Die Ausgestaltung des Gelenkabschnitts als in sich starr zusammenhängendes Bauteil ist besonders vorteilhaft, da hierdurch ein axiales Spiel in dem Gelenkabschnitt ausgeschlossen ist, so dass bei dem bestimmungsgemäßen Einsatz der erfindungsgemäßen Dämpfungseinrichtung zum einen die Dämpfungseinrichtung bei einer axialen Relativbewegung der Bauelemente sofort anspricht und zum anderen ein Verschleiß der Dämpfungseinrichtung aufgrund von axialem Spiel in dem Gelenkabschnitt ausgeschlossen ist. Darüber hinaus ermöglicht die erfindungsgemäße, und in besonderem Maße die integral einstückige Ausbildung, eine einfache Herstellung eines verschleißfesten Biegegelenks. Besonders bevorzugt ist das gesamte Biegegelenk entsprechend als in sich starr zusammenhängendes Bauteil ausgebildet, wodurch die genannten Vorteile der entsprechenden Ausgestaltung des Gelenkabschnitts noch verstärkt sein können.

Erfindungsgemäß ist das Biegegelenk in seinem Gelenkabschnitt um eine Rotationsachse biegbar, wenn eine externe Kraft das Montageelement des Biegegelenks relativ zu dem Anschlusselement, an dem das Biegegelenk befestigt ist, mit einer relativen Kraftrichtung senkrecht zur axialen Richtung und senkrecht zur Rotationsachse beaufschlagt. Eine solche externe Kraft kann bei dem bestimmungsgemäßen Gebrauch einer erfindungsgemäßen Dämpfungseinrichtung beispielsweise durch eine Relativbewegung der Bauelemente, zwischen die die Dämpfungseinrichtung montiert ist, senkrecht zur axialen Richtung realisiert sein. Eine Verbiegung des Gelenkabschnitts kann insbesondere bei Einwirkung einer entsprechenden externen Kraft eintreten, die eine Komponente aufweist, deren Richtung senkrecht zur Rotationsachse und senkrecht zur axialen Richtung liegt. Vorzugsweise ist das Biegegelenk so ausgebildet, dass es sich bei dem Auftreten einer entsprechenden externen Kraft ausschließlich in dem Gelenkabschnitt verbiegt. Vorzugsweise ist das Biegegelenk so ausgebildet, dass es in dem Gelenkabschnitt um mehrere Rotationsachsen, die jeweils senkrecht auf der axialen Richtung stehen, biegbar ist. Vorliegend ist von dem Begriff "biegbar" stets "elastisch biegbar" umfasst. Die elastische Verbiegbarkeit des Biegegelenks bringt besondere Vorteile mit sich. So kann hierdurch insbesondere ein Verschleiß des Biegegelenks bei wechselnder Belastung senkrecht zur axialen Richtung minimiert werden. Ferner geht mit der elastischen Verbiegbarkeit stets einher, dass das Biegegelenk bei einer Verbiegung bestrebt ist, in seine Ruhelage, in der es nicht verbogen ist, zurückzukehren. Dadurch kann auch einer zu großen Auslenkung der durch die Dämpfungseinrichtung verbundenen Bauelemente senkrecht zur axialen Richtung entgegengewirkt werden.

Vorzugsweise ist das Biegegelenk so ausgebildet, dass es sich bei einer Belastung durch eine Kraft, die zwischen dem Anschlusselement und dem Montageelement ausschließlich in axialer Richtung wirkt und das Biegegelenk in der Ebene senkrecht zur axialen Richtung gleichmäßig beaufschlagt, nicht verbiegt, so dass bei der bestimmungsgemäßen Verwendung der erfindungsgemäßen Dämpfungseinrichtung zwischen zwei Bauelementen eine Relativbewegung in axialer Richtung der Bauelemente direkt in eine Relativbewegung der Anschlusselemente umgewandelt wird, so dass der Axialdämpfer der Dämpfungseinrichtung die Relativbewegung unmittelbar dämpfen kann. Die Dämpfungseinrichtung ist somit bevorzugt so ausgebildet, dass Axialdämpfer und Biegegelenk so aufeinander abgestimmt sind, dass sich das Biegegelenk in einem axialen Dämpfungsbereich der Dämpfungseinrichtung, und damit innerhalb des funktionalen Dämpfungsbereichs des Axialdämpfers, axial starr verhält, d. h. dass der Axialdämpfer bei Einwirken einer axialen Kraft auf die Dämpfungseinrichtung stets eine Verschiebung der Anschlusselemente innerhalb des Verschiebebereichs zulässt, bevor es zu einer Verbiegung der Biegegelenke kommt.

Besonders bevorzugt ist das Biegegelenk so ausgebildet, dass es sich bei dem Einwirken einer relativen Kraft zwischen Montageelement und an dem Biegegelenk befestigten Anschlusselement, die senkrecht zur Rotationsachse und zur axialen Richtung wirkt, ausschließlich in dem Gelenkabschnitt verbiegt. Insbesondere kann hierzu vorgesehen sein, dass hierbei eine Verbiegung des Montageelements ausgeschlossen ist. Insbesondere kann bei einer entsprechenden Krafteinwirkung ausgeschlossen sein, dass sich die axialen Randabschnitte des Biegegelenks, die sich jeweils über mindestens 5 %, insbesondere mindestens 10 % der axialen Länge des Biegegelenks erstrecken, verbiegen. Hierdurch kann eine ausreichend starre Befestigung des Biegegelenks an dem Axialdämpfer und an einem Bauelement gewährleistet sein. Besonders bevorzugt beträgt die Erstreckungslänge des Gelenkabschnitts mindestens 50 %, insbesondere zwischen 50 % und 90 % der Gesamterstreckung des Biegegelenks in axialer Richtung. Dadurch kann eine Verbiegbarkeit besonders gut gewährleistet sein und darüber hinaus die Verbiegbarkeit auf den Gelenkabschnitt beschränkt sein. In der Dämpfungseinrichtung kann in einer Ausführungsform das Biegegelenk integral einstückig mit dem Axialdämpfer ausgeführt sein. In einer besonders einfach und kostengünstig herstellbaren Ausführungsform ist das Biegegelenk als von dem Axialdämpfer separates Element ausgebildet und wechselweise an dem Anschlusselement montierbar und demontierbar. Hierzu kann das Biegegelenk bevorzugt einen Befestigungsabschnitt aufweisen, mit dem es an dem Anschlusselement befestigbar ist. Der Befestigungsabschnitt kann bevorzugt starr ausgebildet sein und insbesondere an dem dem Montageelement gegenüberliegenden axialen Ende des Biegegelenks angeordnet sein. In einer Ausführungsform ist das Biegegelenk für sich genommen so ausgebildet, dass es einen Befestigungsabschnitt aufweist, mit dem es an einem der Anschlusselemente des Axialdämpfers befestigbar ist, bzw. in einer erfindungsgemäßen Dämpfungseinrichtung befestigt ist, wobei das Biegegelenk ferner ein Montageelement zur Montage an einem der Bauelemente aufweist, wobei der Gelenkabschnitt zwischen Montageelement und Befestigungsabschnitt angeordnet ist. Besonders bevorzugt umfasst der Gelenkabschnitt dabei ein Biegeelement, wobei das Biegeelement, das Montageelement und der Befestigungsabschnitt jeweils als einzelne Elemente ausgebildet sind, die in dem erfindungsgemäßen Biegegelenk starr miteinander verbunden sind. Beispielsweise kann die Verbindung dadurch erfolgen, dass das Biegeelement an dem Montageelement und/oder dem Befestigungsabschnitt fest angeschraubt ist oder durch eine Klemmvorrichtung positionsfest an Montageelement und/oder Befestigungsabschnitt verklemmt ist. Ein entsprechender Aufbau des erfindungsgemäßen Biegegelenks kann den besonderen Vorteil mit sich bringen, dass das Biegegelenk sehr kostengünstig herstellbar ist und sehr einfach und kostengünstig auf verschiedene erfindungsgemäße Dämpfungseinrichtungen, die für bestimmte Verwendungszwecke vorgesehen sind, ausgelegt werden kann, da Montageelement und Befestigungsabschnitt in großen Stückzahlen hergestellt werden können und ein Biegeelement, beispielsweise durch gezielte Wahl des Materials und/oder der Materialstärke des Biegegelenks, gezielt zum Erreichen der gewünschten Eigenschaften des Biegegelenks verwendet werden kann. In einer Ausführungsform kann dabei beispielsweise das Montageelement und/oder der Befestigungsabschnitt einen Fixierflansch aufweisen, der eine Anlagefläche ausbildet, die in der axialen Richtung und einer Querrichtung verläuft, wobei das Biegeelement an der Anlagefläche anliegt und ein Gegenstück an der von der Anlagefläche wegweisenden Seite des Biegeelements vorgesehen ist, das zum Fixierflansch hin gegen das Biegeelement gepresst ist, insbesondere durch Verschrauben mit dem Fixierflansch, so dass ein Kraftschluss zwischen Biegeelement und Fixierflansch hergestellt ist. Besonders bevorzugt ist das Gegenstück als Anpressabschnitt eines Winkelelements ausgebildet, wobei das Winkelelement einen senkrecht zur Anlagefläche von dem Anpressabschnitt wegverlaufenden Stützabschnitt aufweist, über den es zusätzlich mit dem Montageelement bzw. Befestigungsabschnitt fixiert ist, insbesondere durch Verschrauben. Bei einem Verfahren zur Herstellung des Biegegelenks ist es dann besonders vorteilhaft, wenn das Biegeelement in einem ersten Schritt über den Anpressabschnitt an den Fixierflansch von Montageelement bzw. Biegeabschnitt gepresst wird, wonach in einem zweiten Schritt die zusätzliche Fixierung über den Stützabschnitt erfolgt. Besonders bevorzugt sind dabei Anpressabschnitt und Fixierflansch so ausgebildet, dass sie an ihren ihre Kontaktfläche mit dem Biegeelement in axialer Richtung begrenzenden Kanten abgerundet sind, so dass bei einer Biegebeanspruchung des Biegeelements eine zu große Belastung durch an das Biegeelement angrenzende Kanten effektiv vermieden werden kann. In einer Ausführungsform ist das Biegeelement über ein Klemmelement an dem Montageelement und/oder dem Befestigungsabschnitt befestigt. Hierzu kann beispielsweise das Montageelement bzw. der Befestigungsabschnitt eine V-förmige Aussparung aufweisen, wobei das Biegeelement in die V-förmige Aussparung eingesetzt ist und an jeder Seite des Biegeelements in die V-förmige Aussparung ein Klemmelement eingesetzt ist, das mit dem Montageelement bzw. Befestigungsabschnitt jeweils so fixiert ist, dass die beiden Klemmelemente jeweils in der V-förmigen Aussparung gegen das Montageelement bzw. den Befestigungsabschnitt und das Biegeelement pressen, so dass ein Kraftschluss zwischen dem Biegeelement und den Klemmelementen und zwischen den Klemmelementen und dem Montageelement bzw. Befestigungsabschnitt in der V-förmigen Aussparung hergestellt ist. Auch in dieser Ausführungsform ist es besonders vorteilhaft, wenn die Klemmelemente an ihrem axialen Ende, an dem sie an dem Biegeelement anliegen, eine abgerundete Kante aufweisen, um eine zu hohe Materialbelastung des Biegeelements bei einer Biegebelastung zu verhindern, wodurch eine lange Haltbarkeit des Biegegelenks sichergestellt sein kann.

Dem Fachmann ist ersichtlich, dass die erfindungsgemäße Dämpfungseinrichtung wesentliche Vorteile gegenüber herkömmlichen Dämpfungseinrichtungen mit sich bringt. Zum einen gewährleistet die Verbiegbarkeit des Biegegelenks um eine Rotationsachse, die senkrecht auf der axialen Richtung steht, dass der Axialdämpfer der Dämpfungseinrichtung nicht übermäßig mit einer Kraft senkrecht zur axialen Richtung beaufschlagt wird. Dadurch sind möglichst gleichbleibend gute Dämpfungseigenschaften des Axialdämpfers sichergestellt und ein Verschleiß des Axialdämpfers minimiert. Die erfindungsgemäße Dämpfungseinrichtung zeichnet sich somit in besonderem Maße durch Robustheit und Haltbarkeit aus. Zum anderen gewährleistet das Biegegelenk gleichzeitig eine möglichst spielfreie Montage des Axialdämpfers an zwei Bauelementen, so dass die erfindungsgemäße Dämpfungseinrichtung ein möglichst umgehendes Dämpfen von axialen Relativbewegungen zwischen zwei Bauelementen gewährleisten kann. Darüber hinaus ist die Dämpfungseinrichtung neben ihren vorteilhaften funktionellen Eigenschaften besonders kostengünstig herstellbar, insbesondere da Biegegelenke kostengünstiger herstellbar sind als in herkömmlichen Dämpfungseinrichtungen zum Einsatz kommende Gelenklager oder Kugelgelenke. Ferner können die Biegegelenke einfach wartungsfrei realisiert werden, was einen geringen Wartungsaufwand der erfindungsgemäßen Dämpfungseinrichtung mit sich bringen kann.

In einer Ausführungsform der erfindungsgemäßen Dämpfungseinrichtung ist ein erstes Biegegelenk an dem ersten Anschlusselement des Axialdämpfers und ein zweites Biegegelenk an dem zweiten Anschlusselement des Axialdämpfers angeordnet, so dass der Axialdämpfer an zwei Bauelementen jeweils über ein Biegegelenk befestigt werden kann. In einer Ausführungsform weist die Dämpfungseinrichtung nur ein Biegegelenk auf, das an einem der Anschlusselemente des Axialdämpfers befestigt ist, so dass bei der bestimmungsgemäßen Verwendung der Dämpfungseinrichtung das eine Anschlusselement unmittelbar an ein Bauelement montiert werden kann und das andere Anschlusselement über das Biegegelenk an dem anderen Bauelement montiert werden kann. Besonders bevorzugt umfasst die Dämpfungseinrichtung eine Biegegelenkanordnung, die eine Befestigung des Axialdämpfers an den beiden Bauelementen ermöglicht, die um zwei aufeinander senkrecht stehende Rotationsachsen, die jeweils auf der axialen Richtung senkrecht stehen, verbiegbar ist. Diese Biegegelenkanordnung kann beispielsweise durch die Befestigung eines ersten Biegegelenks an dem ersten Anschlusselement und eines zweiten Biegegelenks an dem zweiten Anschlusselement gewährleistet sein, wobei das erste Biegegelenk in seinem Gelenkabschnitt um eine erste Rotationsachse senkrecht zur axialen Richtung biegbar ist und das zweite Biegegelenk um eine zweite Rotationsachse senkrecht zur axialen Richtung biegbar ist, wobei die Rotationsachsen aufeinander senkrecht stehen. Die Biegegelenkanordnung kann beispielsweise über das Vorsehen von nur einem Biegegelenk an nur einem Anschlusselement des Axialdämpfers realisiert sein, wobei dieses eine Biegegelenk um zwei aufeinander senkrecht stehende, jeweils zur axialen Richtung senkrecht verlaufende Rotationsachsen biegbar ist. Besonders bevorzugt kann ein solches Biegegelenk an beiden Anschlusselementen vorgesehen sein. Das Vorsehen einer entsprechenden Biegegelenkanordnung ist besonders vorteilhaft, da dadurch sämtliche Relativbewegungen senkrecht zur axialen Richtung, die zwei Bauelemente ausführen, zwischen die in axialer Richtung die Dämpfungseinrichtung montiert ist, zumindest teilweise von der Biegegelenkanordnung aufgenommen werden können, so dass der Axialdämpfer vor übermäßiger Belastung senkrecht zur axialen Richtung besonders gut geschützt sein kann.

In einer Ausführungsform weist der Gelenkabschnitt des zumindest einen Biegegelenks zumindest einen Biegeabschnitt auf, dem genau eine Rotationsachse senkrecht zur axialen Richtung zugeordnet ist, wobei das Biegegelenk insbesondere so ausgebildet ist, dass eine Verbiegung des Biegegelenks bei einer Belastung des Montageelements relativ zum Anschlusselement mit einer Kraft senkrecht zur axialen Richtung und senkrecht zu der dem Biegeabschnitt zugeordneten Rotationsachse ausschließlich innerhalb der axialen Erstreckung des Biegeabschnitts erfolgt. Dabei können die übrigen axialen Abschnitte des Biegegelenks starr bleiben, so dass sie sich bei dem Anliegen der Kraft nicht verbiegen. Der Biegeabschnitt kann bei der mehrelementigen Ausgestaltung des Biegegelenks das Biegeelement umfassen oder aus diesem bestehen. Die Beschränkung der Verbiegbarkeit auf einen axialen Biegeabschnitt bringt den besonderen Vorteil mit sich, dass das Biegegelenk außerhalb des Biegeabschnitts besonders robust ausgestaltet sein kann, während der Biegeabschnitt die Biegefunktionalität des Biegegelenks gewährleistet. Dadurch, dass dem Biegeabschnitt genau eine Rotationsachse zugeordnet ist, verhält er sich bei einer Biegebelastung, die durch eine an seinen axialen Enden anliegende relative Kraft mit einer Kraftrichtung entlang seiner Rotationsachse auf ihn wirkt, starr, was eine besondere Stabilität des Biegegelenks mit sich bringt. Eine Verbiegung des Biegeabschnitts kann insbesondere bei Einwirkung einer entsprechenden externen Kraft eintreten, die eine Komponente aufweist, deren Richtung senkrecht zu der ihm zugeordneten Rotationsachse und senkrecht zur axialen Richtung liegt.

In einer Ausführungsform weist der Gelenkabschnitt einen ersten Biegeabschnitt und einen zweiten Biegeabschnitt auf, die in der axialen Richtung hintereinander angeordnet sind, wobei das Biegegelenk in seinem ersten Biegeabschnitt um eine erste Rotationsachse, die senkrecht auf der axialen Richtung steht, und in seinem zweiten Biegeabschnitt um eine zweite Rotationsachse, die senkrecht auf der axialen Richtung und auf der ersten Rotationsachse steht, biegbar ist, insbesondere elastisch biegbar ist. Besonders bevorzugt ist das Biegegelenk so ausgebildet, dass der erste Biegeabschnitt starr gegenüber einer relativen Krafteinwirkung entlang der ersten Rotationsachse an seinen axialen Enden, d. h. starr gegenüber einer Biegebelastung betreffend eine Biegung um die zweite Rotationsachse, ausgebildet ist und/oder dass der zweite Biegeabschnitt starr gegenüber einer relativen Krafteinwirkung entlang der zweiten Rotationsachse an seinen axialen Enden, d. h. starr gegenüber einer Biegebelastung betreffend eine Biegung um die erste Rotationsachse, ausgebildet ist. Dadurch kann gewährleistet sein, dass bei einer relativen Kraftbelastung zwischen Montageelement und dem Anschlusselement, an dem das Biegegelenk befestigt ist, in einer Richtung entlang der ersten Rotationsachse eine Verbiegung des Biegegelenks nicht im ersten Biegeabschnitt, aber im zweiten Biegeabschnitt eintritt, während bei einer relativen Kraftbelastung entlang der zweiten Rotationsachse eine Verbiegung des Biegegelenks nicht im zweiten Biegeabschnitt, aber im ersten Biegeabschnitt eintritt. Bei dieser Ausführungsform der erfindungsgemäßen Dämpfungseinrichtung kann gleichzeitig eine hohe Steifigkeit des Biegegelenks gewährleistet sein, was für die Robustheit und Funktionalität der Dämpfungseinrichtung zum Gewährleisten einer axialen Dämpfung vorteilhaft ist, und die Aufnahme von Kräften an den axialen Enden der Dämpfungseinrichtung, die senkrecht zur axialen Richtung ausgerichtet sind, durch das Biegegelenk gewährleistet sein. In einer Ausführungsform, in der das Biegegelenk mehrere einzelne Elemente umfasst, weist der erste Biegeabschnitt ein erstes Biegeelement und der zweite Biegeabschnitt ein zweites Biegeelement auf, wobei die Biegeeigenschaften der beiden Biegeabschnitte jeweils durch die Biegeeigenschaften ihres jeweiligen Biegeelementes festgelegt sind.

Besonders bevorzugt ist in axialer Richtung zwischen dem ersten Biegeabschnitt und dem zweiten Biegeabschnitt ein starrer Zwischenabschnitt vorgesehen, der die Biegeabschnitte verbindet. Bei einer relativen Kraftbelastung an den axialen Enden des Biegegelenks senkrecht zur axialen Richtung erfolgt durch die starre Ausgestaltung des Zwischenabschnitts keine Verbiegung im Zwischenabschnitt, sondern nur eine Verbiegung in den Biegeabschnitten. Das Vorsehen eines Zwischenabschnitts zwischen den beiden Biegeabschnitten kann zur Gewährleistung einer ausreichenden Steifigkeit des Biegegelenks besonders vorteilhaft sein. In einer Ausführungsform, in der das Biegegelenk aus mehreren Elementen hergestellt ist, kann beispielsweise vorgesehen sein, dass das Biegegelenk als separate Elemente einen Befestigungsabschnitt, das Montageelement, den Zwischenabschnitt und zwei Biegeelemente umfasst, wobei die Elemente erfindungsgemäß an ihren Verbindungsstellen starr miteinander verbunden sind, d. h. sich an ihren Verbindungsstellen bestimmungsgemäß nicht gegeneinander bewegen können. Beispielsweise kann ein erstes Biegeelement an dem Montageelement und ein zweites Biegeelement an dem Befestigungsabschnitt befestigt sein, wobei der Zwischenabschnitt an beiden Biegeelementen befestigt ist und die beiden Biegeelemente miteinander verbindet. Die Befestigung der Biegeelemente an dem Zwischenabschnitt kann wie oben zu dem Befestigungsabschnitt bzw. Montageelement erläutert erfolgen, beispielsweise kann der Zwischenabschnitt hierzu zwei axial zueinander versetzte Fixierflansche oder zwei axial zueinander versetzte V-förmige Aussparungen aufweisen, wobei die V-förmigen Aussparungen mit den Spitzen ihrer V-Formen aufeinander zuweisen, beispielsweise kann der Zwischenabschnitt eine V-förmige Aussparung und axial versetzt einen Fixierflansch aufweisen.

Besonders bevorzugt weist der Zwischenabschnitt in allen drei Raumrichtungen eine Erstreckungslänge auf, die mindestens das Vierfache der jeweiligen Erstreckungslänge der Biegeabschnitte entlang der Richtung senkrecht zur axialen Richtung und senkrecht zu ihrer jeweiligen Rotationsachse beträgt. Dadurch kann die starre Eigenschaft des Zwischenabschnitts bei einer Kraftbelastung des Biegegelenks an seinen axialen Enden senkrecht zur axialen Richtung besonders einfach realisiert sein. Dadurch kann gewährleistet sein, dass sich der Zwischenabschnitt bei einer Belastung des Biegegelenks an seinen axialen Enden mit einer relativen Kraft senkrecht zur axialen Richtung stets starr verhält, während eine Verbiegung des Biegegelenks in den Biegeabschnitten, insbesondere ausschließlich in den Biegeabschnitten, eintritt.

In einer Ausführungsform besteht der zumindest eine Biegeabschnitt aus nur einem Material, wobei das Material in dem Biegeabschnitt eine Stärke in einer Richtung senkrecht zur axialen Richtung und senkrecht zu der dem Biegeabschnitt zugeordneten Rotationsachse aufweist, die weniger als 5 %, insbesondere weniger als 3 % der axialen Erstreckungslänge des Biegegelenks, insbesondere weniger als 5 % der axialen Erstreckungslänge des Biegeabschnitts, beträgt. Dies kann für jeden Biegeabschnitt entsprechend gelten. Die einem Biegeabschnitt zugeordnete Rotationsachse ist die Achse, um die der Biegeabschnitt biegbar ist. Über das Verhältnis zwischen der genannten Stärke des Biegeabschnitts und der axialen Erstreckungslänge des Biegegelenks, insbesondere der axialen Erstreckungslänge des Biegeabschnitts, kann die Biegeeigenschaft des Biegeabschnitts bei einer Verbiegung um die ihm zugeordnete Rotationsachse besonders vorteilhaft eingestellt sein. Insbesondere kann durch die angegebenen Verhältnisse eine elastische Verbiegbarkeit des Biegeabschnitts bereitgestellt werden, während gleichzeitig ein Material mit einer solchen Festigkeit verwendet werden kann, das zumindest in der axialen Richtung der Biegeabschnitte hinreichend starr ist, um besonders gute Dämpfungseigenschaften der Dämpfungseinrichtung bereitzustellen, die bereits bei der kleinsten Auslenkung der Bauelemente, zwischen die die Dämpfungseinrichtung montiert ist, zum Tragen kommen.

In einer Ausführungsform beträgt die Erstreckungslänge des zumindest einen Biegeabschnitts entlang der ihm zugeordneten Rotationsachse mindestens das Doppelte, insbesondere mindeste das Vierfache der Erstreckungslänge des Biegeabschnitts in einer Erstreckungslänge, die senkrecht zu der ihm zugeordneten Rotationsachse und senkrecht zur axialen Richtung steht. Die Angaben beziehen sich dabei jeweils auf die minimale Erstreckungslänge des Biegeabschnitts in der entsprechenden Richtung. Bei dieser Ausführungsform kann eine hohe Steifigkeit des Biegeabschnitts bei einer Krafteinwirkung parallel zu der ihm zugeordneten Rotationsachse gewährleistet sein, was die Steifigkeit des Biegegelenks und somit die Dämpfungseigenschaften und das direkte Ansprechen der Dämpfungseinrichtung insgesamt positiv beeinflussen kann. Selbstverständlich können die genannten vorteilhaften Eigenschaften des Biegeabschnitts bei sämtlichen Biegeabschnitten vorgesehen sein. In einer Ausführungsform besteht der gesamte Gelenkabschnitt des Biegegelenks, insbesondere das gesamte Biegegelenk, aus nur einem Material. Als ein solches Material kann beispielsweise ein Stahl vorteilhaft sein. Vorzugsweise ist hierbei ein Stahl mit einer solchen hohen Streckgrenze vorgesehen, dass eine elastische Verbiegbarkeit des Biegegelenks bereitgestellt wird, insbesondere unter Gewährleistung einer langen Haltbarkeit des Biegegelenks.

In einer Ausführungsform besteht der Gelenkabschnitt, insbesondere das Biegegelenk, aus Vollmaterial, wobei insbesondere der zumindest eine Biegeabschnitt eine Form nach Art einer Platte aufweist, deren flächige Erstreckung durch die axiale Richtung und durch die ihm zugeordnete Rotationsachse festgelegt ist. Besonders bevorzugt kann das gesamte Biegegelenk aus Vollmaterial bestehen. In einer Ausführungsform weist das Biegeelement des Biegeabschnitts eine Form nach Art einer Platte auf, deren flächige Erstreckung durch die axiale Richtung und durch die ihm zugeordnete Rotationsachse festgelegt ist. Durch die Realisierung des Gelenkabschnitts oder des gesamten Biegegelenks aus Vollmaterial kann eine besonders robuste Ausgestaltung des Biegegelenks realisiert sein. Durch die Ausgestaltung des Biegeabschnitts bzw. des Biegeelements mit einer Form nach Art einer Platte kann eine sehr gute Verbiegbarkeit, insbesondere elastische Verbiegbarkeit des Biegeabschnitts gewährleistet sein, während gleichzeitig der Biegeabschnitt starr gegenüber einer Krafteinwirkung an seinen axialen Enden entlang der ihm zugeordneten Rotationsachse ist, was für die Steifigkeit des Biegegelenks besonders vorteilhaft sein kann. Die Form einer Platte ist dabei dadurch gekennzeichnet, dass die Erstreckungslänge der Platte in ihrer flächigen Erstreckung wesentlich größer ist als die Erstreckungslänge der Platte entlang ihrer Plattendicke. Beispielsweise können die Erstreckungslängen der flächigen Erstreckung jeweils mindestens das Fünffache, insbesondere mindestens das Zehnfache der Plattendicke betragen.

In einer Ausführungsform weist das Biegegelenk einen ersten Flansch auf, mit dem es an dem ersten oder zweiten Anschlusselement befestigt ist, sowie einen zweiten Flansch, der das Montageelement des Biegegelenks bildet. Über die Flansche ist das Biegegelenk besonders einfach und robust an einem Anschlusselement des Axialdämpfers und an einem Bauelement demontierbar befestigbar, wobei der erste Flansch als Befestigungsabschnitt des Biegegelenks fungieren kann. Dadurch lässt sich die Dämpfungseinrichtung besonders einfach und kostengünstig herstellen und zwischen zwei Bauelemente montieren. Insbesondere können dadurch die Biegegelenke unabhängig von dem Axialdämpfer hergestellt werden, was die gesamte Produktion der Dämpfungseinrichtung erheblich vereinfacht und vergünstigt. Jeder Flansch kann dabei in allen drei Raumrichtungen eine Erstreckungslänge aufweisen, die mindestens das Vierfache der Erstreckungslänge des zumindest einen Biegeabschnitts entlang der Richtung senkrecht zur axialen Richtung und senkrecht zu der ihm zugeordneten Rotationsachse beträgt. Dies kann insbesondere für sämtliche Biegeabschnitte gelten. Dadurch kann sichergestellt sein, dass der Flansch sich bei sämtlichen Krafteinflüssen auf das Biegegelenk senkrecht zur axialen Richtung stets starr verhält, während sich das Biegegelenk ausschließlich in dem Gelenkabschnitt verbiegt.

Es versteht sich von selbst, dass bei der erfindungsgemäßen Dämpfungseinrichtung an jedem der beiden Anschlusselemente des .Axialdämpfers jeweils ein Biegegelenk vorgesehen sein kann, wobei jedes der Biegegelenke jeweils Eigenschaften aufweisen kann, die vorliegend im Zusammenhang mit vorteilhaften Ausführungsformen der erfindungsgemäßen Dämpfungseinrichtung mit Bezug auf ein Biegegelenk beschrieben sind.

In einer Ausführungsform ist der Axialdämpfer als Viskosedämpfer ausgebildet, der ein Gehäuse und eine Kolben aufweist, wobei der Kolben zu dem Gehäuse innerhalb eines Verschiebebereichs axial verschiebbar angeordnet ist. In dem Gehäuse ist ein viskoses Medium vorgesehen. Gehäuse, Kolben und viskoses Medium sind so aufeinander abgestimmt ausgebildet und angeordnet, dass der Kolben in jeder Position innerhalb des Verschiebebereichs sowohl mit einem ersten axialen Kolbenabschnitt außerhalb des Gehäuses angeordnet ist und mit dem ersten axialen Kolbenabschnitt über ein erstes axiales Ende des Gehäuses vorsteht, als auch mit einem zweiten axialen Kolbenabschnitt innerhalb des Gehäuses angeordnet ist und abschnittsweise in das viskose Medium eingetaucht ist. Der Kolben befindet sich somit in jeder möglichen Position innerhalb des Verschiebebereichs stets mit einem ersten axialen Kolbenabschnitt außerhalb des Gehäuses, und zwar axial neben einem ersten axialen Ende des Gehäuses, und gleichzeitig mit einem zweiten axialen Kolbenabschnitt innerhalb des Gehäuses, wobei er dabei stets abschnittsweise in das viskose Medium in dem Gehäuse eingetaucht ist. An dem ersten axialen Ende des Kolbens ist das erste Anschlusselement und an dem zweiten axialen Ende des Gehäuses ist das zweite Anschlusselement angeordnet. Dabei bilden Kolben und Gehäuse in ihrem Zusammenspiel den axialen Dämpfungsabschnitt des Axialdämpfers aus. Bei einer relativen axialen Verschiebung der Anschlusselemente zueinander verändert sich zwangsläufig die Eintauchtiefe des Kolbens in dem viskosen Medium, wobei während der Veränderung der Eintauchtiefe das viskose Medium sich an dem Kolben schert. Dadurch ist eine Dämpfung einer axialen Relativbewegung der Anschlusselemente zueinander gewährleistet. Je nach vorgesehener Anwendung kann ein Medium mit unterschiedlichen viskosen Eigenschaften zum Bereitstellen unterschiedlicher Dämpfungseigenschaften vorgesehen sein. Die erfindungsgemäße Dämpfungseinrichtung mit dem als Viskosedämpfer ausgebildeten Axialdämpfer bietet eine in hohem Maße wartungsfreie Ausgestaltung der Dämpfungseinrichtung und darüber hinaus ein unmittelbares Ansprechen der Dämpfungseinrichtung auf eine Relativbewegung von zwei Bauelementen, zwischen die die Dämpfungseinrichtung montiert ist, da jede axiale Relativbewegung der Anschlusselemente zueinander eine umgehende Dämpfung durch das Zusammenspiel zwischen Kolben, Gehäuse und viskosem Medium erfährt.

In einer Ausführungsform ist das viskose Medium als viskose Flüssigkeit vorgesehen, wobei der Kolben einen dritten axialen Kolbenabschnitt aufweist, der in jeder Position des Kolbens innerhalb des Verschiebebereichs innerhalb des Gehäuses angeordnet ist und sich axial zwischen dem ersten und dem zweiten Kolbenabschnitt des Kolbens befindet. Dabei ist eine Führung zwischen dem dritten Kolbenabschnitt und dem Gehäuse vorgesehen. Die Führung verhindert einen Schleifkontakt zwischen Kolben und Gehäuse. Die Führung kann beispielsweise als Teflon-, Hartgewebe- oder Messingelement, beispielsweise in Form eines Streifens, ausgebildet sein. Die viskose Flüssigkeit ist axial nur an der Seite des dritten Kolbenabschnitts angeordnet, an der sich der zweite Kolbenabschnitt befindet. Die Führung kann so ausgebildet sein, dass eine Leckage zwischen Führung und drittem Kolbenabschnitt und/oder zwischen Führung und Gehäuse vorhanden ist, durch die viskose Flüssigkeit zwischen Führung und dritten Kolbenabschnitt und/oder zwischen Führung und Gehäuse gelangen kann, wodurch insbesondere eine Schmierung zwischen Führung und Kolben und/oder zwischen Führung und Gehäuse gewährleistet sein kann. In einer Ausführungsform ist axial in Richtung zum ersten Kolbenabschnitt hin neben der Führung eine Dichtung vorgesehen, die so innerhalb des Gehäuses und an dem Kolben angeordnet und ausgebildet ist, dass verhindert ist, dass viskose Flüssigkeit aus dem Gehäuse austritt. In einer Ausführungsform ist das viskose Medium als viskoelastisches Medium ausgebildet, wobei das viskoelastische Medium sämtliches Volumen in einer Arbeitskammer des Gehäuses, insbesondere in dem Gehäuse, das durch den Kolben nicht gefüllt ist, füllt. Das Gehäuse kann die Arbeitskammer umfassen und insbesondere aus der Arbeitskammer bestehen.

Der Kolben ist somit innerhalb der Arbeitskammer des Gehäuses vollständig von dem viskoelastischen Medium umgeben. Dadurch ist gewährleistet, dass der Axialdämpfer auf axiale Relativbewegungen der Anschlusselemente unmittelbar anspricht und solche Relativbewegungen unmittelbar dämpft. Besonders bevorzugt sind Kolben und Gehäuse so zueinander korrespondierend ausgebildet, dass das Volumen des Kolbens, das sich innerhalb der Arbeitskammer des Gehäuses befindet, in jeder Position des Kolbens innerhalb des Verschiebebereichs gleich ist. Dies kann beispielsweise dadurch gewährleistet sein, dass der Kolben einen zylinderförmigen Abschnitt aufweist, dessen Zylinderachse in axialer Richtung verläuft und der sich in jeder Position des Kolbens innerhalb des Verschiebebereichs stets vollständig axial durch die Arbeitskammer das Gehäuse hindurch erstreckt.

Die Erfindung betrifft ferner ein System umfassend zumindest zwei erfindungsgemäße Dämpfungseinrichtungen, wobei die axiale Richtung einer ersten Dämpfungseinrichtung mit der axialen Richtung einer zweiten Dämpfungseinrichtung einen Winkel von mindestens 30°, insbesondere von 60° bis 120° bildet. Durch ein entsprechendes erfindungsgemäßes System kann eine besonders robuste Abstützung von zwei über das System miteinander verbundenen Bauelementen zueinander unter Bereitstellung einer sehr guten Dämpfung der Relativbewegung gewährleistet sein. Besonders bevorzugt kann das erfindungsgemäße System so verwendet werden, dass die erste Dämpfungseinrichtung ein erstes Bauelement axial mit einem zweiten Bauelement verbindet und die zweite Dämpfungseinrichtung das erste Bauelement axial mit einem dritten Bauelement verbindet. Bei der Definition der "axialen Richtung" ist dabei zu berücksichtigen, dass die axiale Richtung stets für eine konkrete erfindungsgemäße Dämpfungseinrichtung festgelegt ist. Beispielsweise kann ein erfindungsgemäßes System zum gedämpften Abstützen eines ersten Bauelements auf einem zweiten Bauelement oder für das gedämpfte Abstützen eines ersten Bauelements gegenüber einem zweiten und einem dritten Bauelement verwendet werden, indem die beiden Axialdämpfer mit ihren axialen Richtungen zwischen erstes und zweites Bauelement bzw. zwischen erstes, zweites und drittes Bauelement montiert werden.

Die Erfindung betrifft ferner die Verwendung eines Biegegelenks zum Montieren eines Axialdämpfers, der zum Dämpfen von Relativbewegungen von zwei Bauelementen zueinander in der axialen Richtung ausgebildet ist, an eines der Bauelemente. Das Biegegelenk weist einen Befestigungsabschnitt, ein in axialer Richtung von dem Befestigungsabschnitt beabstandetes Montageelement und einen den Befestigungsabschnitts mit dem Montageelement verbindenden, als in sich starr zusammenhängendes Bauteil ausgebildeten Gelenkabschnitt auf. Der Gelenkabschnitt ist um zumindest eine Rotationsachse senkrecht zur axialen Richtung elastisch biegbar. Der Gelenkabschnitt des Biegeabschnitts weist zumindest einen axialen Biegeabschnitt auf, dem genau eine Rotationsachse senkrecht zur axialen Richtung zugeordnet ist und der sich gegenüber einer Biegebelastung, die durch eine an seinen axialen Enden anliegende relative Kraft mit einer Kraftrichtung entlang seiner Rotationsachse auf ihn wirkt, starr verhält, wobei der Biegeabschnitt eine Form nach Art einer Platte aufweist, deren flächige Erstreckung durch die axiale Richtung und durch die ihm zugeordnete Rotationsachse festgelegt ist, wobei der Biegeabschnitt eine Erstreckungslänge in einer Richtung senkrecht zur axialen Richtung und senkrecht zu der dem Biegeabschnitt zugeordneten Rotationsachse aufweist, die weniger als 5 % der axialen Erstreckungslänge des Biegeabschnitts beträgt, und wobei der Biegeabschnitt eine Erstreckungslänge entlang der ihm zugeordneten Rotationsachse aufweist, die mindestens das Vierfache der Erstreckungslänge des Biegeabschnitts in der Richtung beträgt, die senkrecht zu der ihm zugeordneten Rotationsachse und senkrecht zur axialen Richtung steht, wobei der Gelenkabschnitt des Biegegelenks aus Vollmaterial besteht. Bei der erfindungsgemäßen Verwendung wird das Bauelement mit seinem Befestigungsabschnitt an dem Axialdämpfer und mit seinem Montageelement an dem Bauelement befestigt. Der Axialdämpfer weist bevorzugt zwei axial voneinander beabstandete Anschlusselemente sowie einen axial zwischen den Anschlusselementen angeordneten Dämpfungsabschnitt auf, wobei das erste Anschlusselement mit dem zweiten Anschlusselement über den Dämpfungsabschnitt verbunden ist unter Gewährleistung einer gedämpften axialen Relativbewegung zwischen den beiden Anschlusselementen, wobei das Biegegelenk mit seinem Befestigungsabschnitt an dem ersten Anschlusselement des Axialdämpfers und mit seinem Montageelement an dem ersten Bauelement befestigt wird, und wobei das zweite Anschlusselement des Axialdämpfers an dem zweiten Bauelement befestigt wird, wobei insbesondere zwischen zweitem Anschlusselement und zweitem Bauelement ein zweites Biegegelenk vorgesehen ist, das mit seinem Befestigungsabschnitt an dem zweiten Anschlusselement des Axialdämpfers und mit seinem Montageelement an dem zweiten Bauelement befestigt wird. Die erfindungsgemäße Verwendung des Biegegelenks kann weitere Merkmale aufweisen und Vorteile mit sich bringen, die jeweils aus der obigen Beschreibung einer erfindungsgemäßen Dämpfungseinrichtung offensichtlich werden.

Die Erfindung betrifft ferner ein Biegegelenk zur Verwendung in einer erfindungsgemäßen Dämpfungseinrichtung. Das Biegegelenk weist einen Befestigungsabschnitt auf, über den es an eines der beiden Anschlusselemente des Axialdämpfers montierbar ist, sowie ein Montageelement, über das es an eines der beiden Bauelemente montierbar ist. Das Biegegelenk weist einen Gelenkabschnitt auf, der als in sich starr zusammenhängendes Bauteil ausgebildet ist und sich axial zwischen dem Befestigungsabschnitt und dem Montageelement erstreckt, wobei das Biegegelenk in seinem Gelenkabschnitt um zumindest eine Rotationsachse, die senkrecht auf der axialen Richtung steht, elastisch biegbar ist. Der Gelenkabschnitt weist einen axialen Biegeabschnitt auf, dem genau eine Rotationsachse senkrecht zur axialen Richtung zugeordnet ist und der sich gegenüber einer Biegebelastung, die durch eine an seinen axialen Enden anliegende relative Kraft mit einer Kraftrichtung entlang seiner Rotationsachse auf ihn wirkt, starr verhält, wobei der Biegeabschnitt eine Form nach Art einer Platte aufweist, deren flächige Erstreckung durch die axiale Richtung und durch die ihm zugeordnete Rotationsachse festgelegt ist, wobei der Biegeabschnitt eine Erstreckungslänge in einer Richtung senkrecht zur axialen Richtung und senkrecht zu der dem Biegeabschnitt zugeordneten Rotationsachse aufweist, die weniger als 5 % der axialen Erstreckungslänge des Biegeabschnitts beträgt, und wobei der Biegeabschnitt eine Erstreckungslänge entlang der ihm zugeordneten Rotationsachse aufweist, die mindestens das Vierfache der Erstreckungslänge des Biegeabschnitts in der Richtung beträgt, die senkrecht zu der ihm zugeordneten Rotationsachse und senkrecht zur axialen Richtung steht, wobei der Gelenkabschnitt des Biegegelenks (1) aus Vollmaterial besteht.

Das Biegegelenk kann weitere Merkmale und Vorteile aufweisen, die aus der obigen Beschreibung der erfindungsgemäßen Dämpfungseinrichtung jeweils ersichtlich sind.

Die Erfindung betrifft ferner ein Verfahren zum Montieren eines zum Dämpfen von Relativbewegungen in einer axialen Richtung zwischen zwei Bauelementen ausgebildeten Axialdämpfers zwischen den beiden Bauelementen, wobei an einem axialen Ende des Axialdämpfers ein axiales Ende eines Biegegelenks befestigt wird, das einen Gelenkabschnitt aufweist, in dem es um zumindest eine Rotationsachse, die senkrecht auf der axialen Richtung steht, elastisch biegbar ist, wobei der Gelenkabschnitt zumindest einen axialen Biegeabschnitt aufweist, dem genau eine Rotationsachse senkrecht zur axialen Richtung zugeordnet ist und der sich gegenüber einer Biegebelastung, die durch eine an seinen axialen Enden anliegende relative Kraft mit einer Kraftrichtung entlang seiner Rotationsachse auf ihn wirkt, starr verhält, wobei der Biegeabschnitt eine Form nach Art einer Platte aufweist, deren flächige Erstreckung durch die axiale Richtung und durch die ihm zugeordnete Rotationsachse festgelegt ist, wobei der Biegeabschnitt eine Erstreckungslänge in einer Richtung senkrecht zur axialen Richtung und senkrecht zu der dem Biegeabschnitt zugeordneten Rotationsachse aufweist, die weniger als 5 % der axialen Erstreckungslänge des Biegeabschnitts beträgt, und wobei der Biegeabschnitt eine Erstreckungslänge entlang der ihm zugeordneten Rotationsachse aufweist, die mindestens das Vierfache der Erstreckungslänge des Biegeabschnitts in der Richtung beträgt, die senkrecht zu der ihm zugeordneten Rotationsachse und senkrecht zur axialen Richtung steht, wobei der Gelenkabschnitt des Biegegelenks aus Vollmaterial besteht, wobei das andere axiale Ende des Biegegelenks an einem der Bauelemente befestigt wird. Besonders bevorzugt wird an dem gegenüberliegenden axialen Ende des Axialdämpfers ein axiales Ende eines zweiten Biegegelenks befestigt, das um zumindest eine Rotationsachse, die senkrecht auf der axialen Richtung steht, biegbar, insbesondere elastisch biegbar ist, wobei das andere axiale Ende des zweiten Biegegelenks an dem anderen der Bauelemente befestigt wird. Das Verfahren bringt Vorteile mit sich und kann weitere Merkmale aufweisen, die aus der obigen Beschreibung der erfindungsgemäßen Dämpfungseinrichtung ersichtlich sind.

Im Folgenden wird die Erfindung anhand von verschiedenen Ausführungsformen unter Bezugnahme auf vier Figuren näher erläutert.

Es zeigen:
- Figur 1:: in einer Prinzipdarstellung eine Ausführungsform eines erfindungsgemäßen Biegegelenks;
- Figur 2:: in einer Prinzipdarstellung eine weitere Ausführungsform eines erfindungsgemäßen Biegegelenks;
- Figur 3:: in einer Prinzipdarstellung eine weitere Ausführungsform eines erfindungsgemäßen Biegegelenks;
- Figur 4:: in einer Prinzipdarstellung eine weitere Ausführungsform eines erfindungsgemäßen Biegegelenks;
- Figur 5:: in einer Prinzipdarstellung eine Ausführungsform einer erfindungsgemäßen Dämpfungseinrichtung;
- Figur 6:: in einer Prinzipdarstellung eine weitere Ausführungsform einer erfindungsgemäßen Dämpfungseinrichtung.

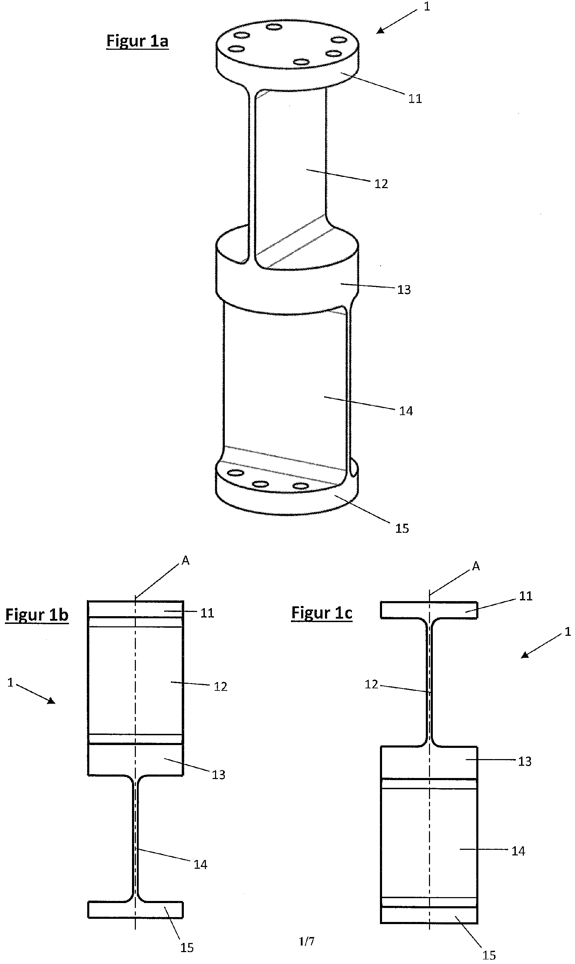

In Figur 1 umfassend die Figuren 1a, 1b und 1c ist eine Ausführungsform eines erfindungsgemäßen Biegegelenks 1 dargestellt. In Figur 1a ist eine Aufsicht schräg zur axialen Richtung A dargestellt, in der Figur 1b ist eine Aufsicht aus einer ersten Richtung senkrecht zur axialen Richtung A dargestellt, in Figur 1c eine Aufsicht aus einer zweiten Richtung senkrecht zur axialen Richtung A, die auch auf der ersten Richtung senkrecht steht.

Wie Figur 1 zu entnehmen ist weist die dargestellte Ausführungsform des erfindungsgemäßen Biegegelenks 1 ein Montageelement 11 und einen in der axialen Richtung A von dem Mont.ageelement 11 beabstandeten Befestigungsabschnitt 15 auf, wobei Montageelement 11 und Befestigungsabschnitt 15 über einen Gelenkabschnitt miteinander verbunden sind und vorliegend als Flansche und identisch ausgebildet sind. Der Gelenkabschnitt umfasst einen ersten Biegeabschnitt 12, einen Zwischenabschnitt 13 und einen zweiten Biegeabschnitt 14, wobei die Biegeabschnitte 12, 14 axial hintereinander angeordnet sind und wobei der Zwischenabschnitt 13 axial zwischen dem ersten Biegeabschnitt 12 und dem zweiten Biegeabschnitt 14 vorgesehen ist und die Biegeabschnitte 12, 14 miteinander verbindet. Das Biegegelenk 1 gemäß Figur 1 ist integral einstückig ausgebildet.

Das Biegegelenk ist in dem ersten Biegeabschnitt 12 um eine erste Rotationsachse senkrecht zur axialen Richtung A biegbar und in dem zweiten Biegeabschnitt 14 um eine zweite Rotationsachse senkrecht zur axialen Richtung A biegbar, wobei die beiden Rotationsachsen aufeinander senkrecht stehen. Die dem ersten Biegeabschnitt 12 zugeordnete Rotationsachse verläuft senkrecht zur Zeichenebene gemäß Figur 1c, die dem zweiten Biegeabschnitt 14 zugeordnete zweite Rotationsachse verläuft senkrecht zur Zeichenebene gemäß Figur 1b. Die beiden Biegeabschnitte 12, 14 weisen jeweils eine Form nach Art einer Platte auf, deren Dicke jeweils wesentlich geringer ist als die Erstreckungslängen ihrer flächigen Erstreckung. Dabei sind die beiden Plattenformen der beiden Biegeabschnitte 12, 14 um 90° zueinander verdreht. Das dargestellte Biegegelenk 1 ist insgesamt aus nur einem Material hergestellt, wodurch die Herstellung besonders kostengünstig und das Biegegelenk 1 besonders robust realisiert werden kann. Als Material ist ein Stahl verwendet, der eine ausreichend hohe Streckgrenze und Festigkeit aufweist, damit eine ermüdungsfreie, elastische Biegbarkeit des Biegegelenks 1 in den Biegeabschnitten 12, 14 gewährleistet ist.

Das dargestellte Biegegelenk 1 ist so ausgebildet, dass bei einer relativen Krafteinwirkung zwischen Montageelement 11 und Befestigungsabschnitt 15 senkrecht zur axialen Richtung A eine Verbiegung des Biegegelenks 1 ausschließlich in den Biegeabschnitten 12, 14 erfolgt, während Montageelement 11, Zwischenabschnitt 13 und Befestigungsabschnitt 15 sich starr verhalten. Dies ist vorliegend dadurch realisiert, dass die Erstreckungslängen der Biegeabschnitte 12, 14 senkrecht zur axialen Richtung A und zu der ihnen zugeordneten Rotationsachse, d. h. die Dicke der Plattenform der Biegeabschnitte 12, 14 jeweils wesentlich geringer ist als die Erstreckungslänge in derselben Richtung von Montageelement 11, Zwischenabschnitt 13 und Befestigungsabschnitt 15. Während bei beiden Biegeabschnitten 12, 14 das große Verhältnis zwischen axialer Erstreckungslänge des jeweiligen Biegeabschnitts 12, 14 und Dicke des jeweiligen Biegeabschnitts 12, 14 die elastische Biegbarkeit des Biegeabschnitts 12, 14 um die ihm zugeordnete Rotationsachse gewährleistet, gewährleistet gleichzeitig die genannte große Erstreckungslänge von Montageelement 11, Zwischenabschnitt 13 und Befestigungsabschnitt 15 das starre Verhalten dieser Komponenten des Biegegelenks 1 bei einer Verbiegung der Biegeabschnitte 12, 14. Ferner trägt zu dem starren Verhalten von Montageelement 11, Zwischenabschnitt 13 und Befestigungsabschnitt 15 bei, dass ihre Erstreckungslängen in der axialen Richtung A jeweils mindestens das Dreifache der jeweiligen Dicke der Biegeabschnitte 12, 14 beträgt.

Eine Besonderheit des Biegegelenks 1 gemäß Figur 1 besteht ferner darin, dass die Biegeabschnitte 12, 14 jeweils so ausgebildet sind, dass ihre Erstreckungslänge senkrecht zu ihrer zugeordneten Rotationsachse und senkrecht zur axialen Richtung A wesentlich geringer ist als ihre Erstreckungslänge entlang ihrer zugeordneten Rotationsachse. Entsprechend zeichnet sich das beschriebene Biegegelenk 1 dadurch aus, dass bei einer relativen Krafteinwirkung auf Montageelement 11 und Befestigungsabschnitt 15 senkrecht zur axialen Richtung A und senkrecht zur ersten Rotationsachse eine Verbiegung ausschließlich im ersten Biegeabschnitt 12 eintritt, während sich der zweite Biegeabschnitt 14 starr verhält. Bei einer relativen Krafteinwirkung senkrecht zur zweiten Rotationsachse und senkrecht zur axialen Richtung A tritt die Verbiegung des Biegegelenks 1 ausschließlich in dem zweiten Biegeabschnitt 14 ein und nicht in dem ersten Biegeabschnitt 12. Der erste Biegeabschnitt 12 verhält sich somit starr bei einer relativen Krafteinwirkung auf das Biegegelenk 1 am Montageelement 11 und Befestigungsabschnitt 15 entlang der ersten Rotationsachse, und der zweite Biegeabschnitt 14 verhält sich starr bei einer relativen Krafteinwirkung zwischen Montageelement 11 und Befestigungsabschnitt 15 entlang der zweiten Rotationsachse. Darüber hinaus ist das dargestellte Biegegelenk 1 bei einer Belastung durch eine relative Kraft zwischen Montageelement 11 und Befestigungsabschnitt 15 parallel zur axialen Richtung A nicht elastisch verbiegbar. Das dargestellte Biegegelenk 1 weist somit bei Verwendung in einer erfindungsgemäßen Dämpfungseinrichtung 100 den Vorteil auf, dass es zwar Kräfte aus einer beliebigen Richtung senkrecht zur axialen Richtung A unter elastischer Verbiegung aufnehmen kann, wohingegen es sich bei einer axialen Belastung starr verhält, so dass es bei dem Einsatz in einer erfindungsgemäßen Dämpfungseinrichtung 100 das unmittelbare Ankoppeln eines Axialdämpfers in axialer Richtung A an Bauelemente ermöglicht und gleichzeitig eine übermäßige Belastung des Axialdämpfers durch eine Kraft senkrecht zur axialen Richtung A zumindest weitestgehend verhindert.

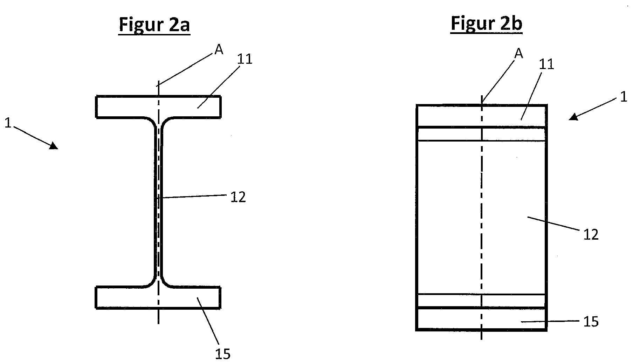

In Figur 2 umfassend die Figuren 2a und 2b ist eine weitere Ausführungsform eines erfindungsgemäßen Biegegelenks 1 dargestellt. In Figur 2a ist eine Aufsicht aus einer ersten Richtung senkrecht zur axialen Richtung A dargestellt, in Figur 2b eine Aufsicht aus einer zweiten Richtung, die senkrecht zur axialen Richtung A und zur ersten Richtung steht. Das Biegegelenk 1 gemäß Figur 2 unterscheidet sich von dem Biegegelenk 1 gemäß Figur 1 dadurch, dass es nur einen Biegeabschnitt 12 aufweist, der Montageelement 11 und Befestigungsabschnitt 15 des Biegegelenks 1 miteinander verbindet. Das Biegegelenk 1 gemäß Figur 2 weist entsprechend auch keinen Zwischenabschnitt 13 auf. Der Gelenkabschnitt des Biegegelenks 1 gemäß Figur 2 ist vielmehr alleine durch den Biegeabschnitt 12 gebildet. Das Biegegelenk 1 gemäß Figur 2 weist, wie zu Figur 1 erläutert, aufgrund der geometrischen Ausgestaltung des Biegeabschnitts 12 eine Verbiegbarkeit ausschließlich in dem Biegeabschnitt 12 auf, wenn Montageelement 11 und Befestigungsabschnitt 15 mit einer relativen Kraft zueinander senkrecht zu der dem Biegeabschnitt 12 zugeordneten Rotationsachse beaufschlagt werden. Das Biegegelenk 1 gemäß Figur 2 ist ebenso wie das Biegegelenk 1 gemäß Figur 1 aus nur einem Material, nämlich Stahl hergestellt, und die geometrische Ausgestaltung von Montageelement 11, Biegeabschnitt 12 und Befestigungsabschnitt 15 entspricht der geometrischen Ausgestaltung der entsprechenden Komponenten des Biegegelenks 1 gemäß Figur 1. Während jedoch das Biegegelenk 1 gemäß Figur 1 um zwei aufeinander senkrecht stehende Rotationsachsen biegbar ist, die jeweils senkrecht auf der axialen Richtung A stehen, ist das Biegegelenk 1 gemäß Figur 2 um nur eine Rotationsachse senkrecht zur axialen Richtung A biegbar. Das Biegegelenk 1 gemäß Figur 2 ist noch günstiger herstellbar als das Biegegelenk 1 gemäß Figur 1 und kann in einer erfindungsgemäßen Dämpfungseinrichtung 100 vorteilhaft eingesetzt werden. Beispielsweise kann das Biegegelenk 1 gemäß Figur 2 in solchen Einbausituationen bei einer erfindungsgemäßen Dämpfungseinrichtung 100 eingesetzt werden, bei der die durch die Dämpfungseinrichtung 100 axial verbundenen Bauelemente konstruktionsbedingt nur eine Relativbewegung in einer einzigen Richtung senkrecht zur axialen Richtung A durchführen können. Beispielsweise kann das Biegegelenk 1 gemäß Figur 2 in einer Dämpfungseinrichtung 100 so eingesetzt werden, dass an jedem Anschlusselement des Axialdämpfers jeweils ein Biegegelenk 1 angeordnet ist, wobei die Biegegelenke 1 in ihrer Ausrichtung zueinander um 90° um die axiale Richtung A verdreht sind, so dass eine solche Dämpfungseinrichtung 100 ebenfalls eine Biegegelenkanordnung aufweist, bei der eine jedwede Kraft senkrecht zur axialen Richtung A eine Verbiegung der Biegegelenkanordnung mit sich bringt, so dass eine zu starke Belastung des Axialdämpfers durch eine relative Kraft zwischen zwei Bauelementen, zwischen die die Dämpfungseinrichtung 100 gespannt ist, zumindest teilweise vermieden werden kann.

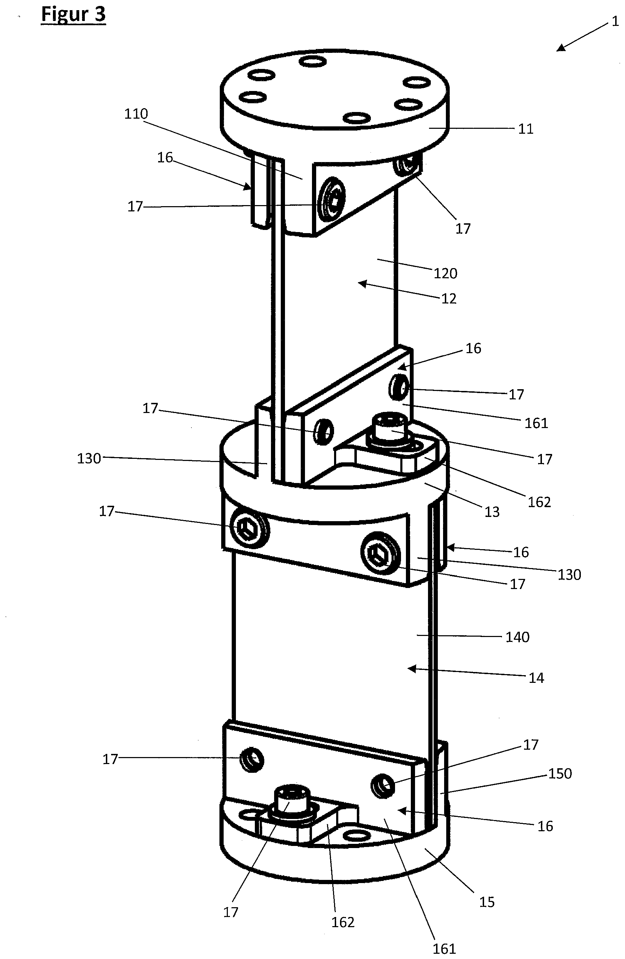

In Figur 3 ist eine weitere Ausführungsform eines erfindungsgemäßen Biegegelenks 1 in einer Prinzipdarstellung dargestellt. Die in Figur 3 dargestellte Ausführungsform umfasst, wie auch die in Figur 1 dargestellte Ausführungsform, zwei Biegeabschnitte 12, 14, zwischen denen in axialer Richtung ein Zwischenabschnitt 13 angeordnet ist. Die Ausführungsform gemäß Figur 3 unterscheidet sich von der Ausführungsform gemäß Figur 1 im Wesentlichen dadurch, dass sie nicht wie die Ausführungsform gemäß Figur 1 als integral einstückiges Bauteil ausgebildet ist sondern aus mehreren einzelnen Elementen hergestellt ist, die starr miteinander verbunden sind.

Die Ausführungsform gemäß Figur 3 weist ein Montageelement 11 auf, das einen Fixierflansch 110 aufweist. Der Fixierflansch 110 weist eine Anlagefläche auf, an der ein erstes Biegeelement 120, das von dem ersten Biegeabschnitt 12 umfasst ist, angeordnet ist. Das erste Biegeelement 120 ist durch ein Winkelelement 16 an die Anlagefläche des Fixierflanschs 110 gepresst. Hierzu weist der Fixierflansch 110 zwei Durchführungen auf, durch die Schrauben 17 gesteckt sind, wohingegen das Winkelelement 16 einen Anpressabschnitt 161 aufweist, der als Gegenplatte ausgebildet ist und zwei Gewindebohrungen aufweist, in die die Schrauben 17 geschraubt sind, so dass der Anpressabschnitt 161 durch die Schrauben 17 gegen das erste Biegeelement 120 zu dem Fixierflansch 110 hin gepresst ist. Dadurch ist durch die Verschraubung ein Kraftschluss zwischen erstem Biegeelement 120 und Montageelement 11 hergestellt. Das Winkelelement 16 weist ferner einen Stützabschnitt 162 auf, der von dem Anpressabschnitt 161 senkrecht zur Anlagefläche weg verläuft. Der Stützabschnitt 162 weist eine Aussparung auf, durch die eine weitere Schraube 17 gesteckt ist, die in eine Gewindebohrung, die in dem Montageelement 11 vorgesehen ist, geschraubt ist, so dass der Stützabschnitt 162 gegen das Montageelement 11 gepresst ist. Dadurch ist eine zusätzliche Stützung des Winkelelements 16 an dem Montageelement 11 gewährleistet, was die Haltbarkeit der Ausführungsform gemäß Figur 3 noch weiter verbessert.

Die Fixierung des ersten Biegeelements 120 erfolgt an dem Zwischenabschnitt 13 entsprechend, wofür der Zwischenabschnitt 13 einen entsprechenden Fixierflansch 130 aufweist. Der Zwischenabschnitt 13 weist ferner einen weiteren Fixierflansch 130 auf, der axial von dem ersten Fixierflansch 130 beabstandet ist und 90° zu diesem verdreht angeordnet ist. An dem zweiten Fixierflansch 130 ist das zweite Biegeelement 140 der beschriebenen Ausführungsform, das von dem zweiten Biegeabschnitt 14 umfasst ist, auf die beschriebene Art und Weise befestigt. Das zweite Biegeelement 140 ist ferner an dem Fixierflansch 150 des Befestigungsabschnitts 15 auf die beschriebene Art und Weise befestigt. Vorliegend sind Montageelement 11 und Befestigungsabschnitt 15 identisch ausgebildet. Aus der beschriebenen Ausführungsform ergibt sich, dass das Biegegelenk 1 als in sich starr zusammenhängendes Bauteil ausgebildet ist, da durch die kraftschlüssige, starre Verbindung zwischen Montageelement 11 und erstem Biegeelement 120, erstem Biegeelement 120 und Zwischenabschnitt 13, Zwischenabschnitt 13 und zweitem Biegeelement 140 und zweiten Biegeelement 140 und Befestigungsabschnitt 15 sichergestellt ist, dass das Biegegelenk 1 bei einer Verwendung in einer erfindungsgemäßen Dämpfungseinrichtung in sich kein axiales Spiel aufweist, was die beschriebenen besonders vorteilhaften Eigenschaften des Biegegelenks 1 und der erfindungsgemäßen Dämpfungseinrichtung mit sich bringt. Aus Figur 3 ist ferner erkennbar, dass sämtliche Fixierflansche 110, 130, 150 und Winkelelemente 16 an den axialen Enden, mit denen sie an den Biegeelementen 120, 140 anliegen, abgerundete Kanten aufweisen, so dass selbst bei einer langdauernden, häufig wechselnden Belastung des Biegegelenks 1 keine übermäßige Beanspruchung der Biegeelemente 120, 140 durch die Kanten von den Fixierflanschen 110, 130, 150 und der Winkelelemente 16 eintritt.

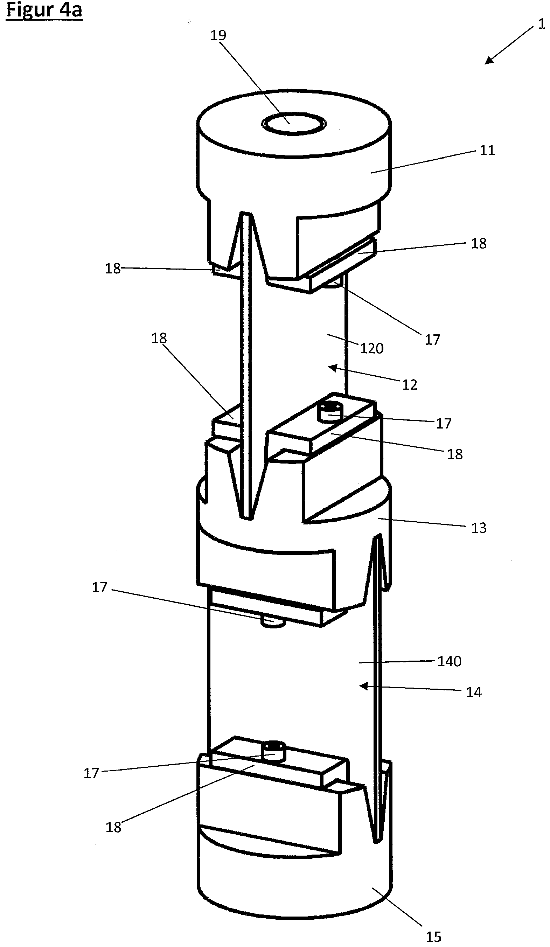

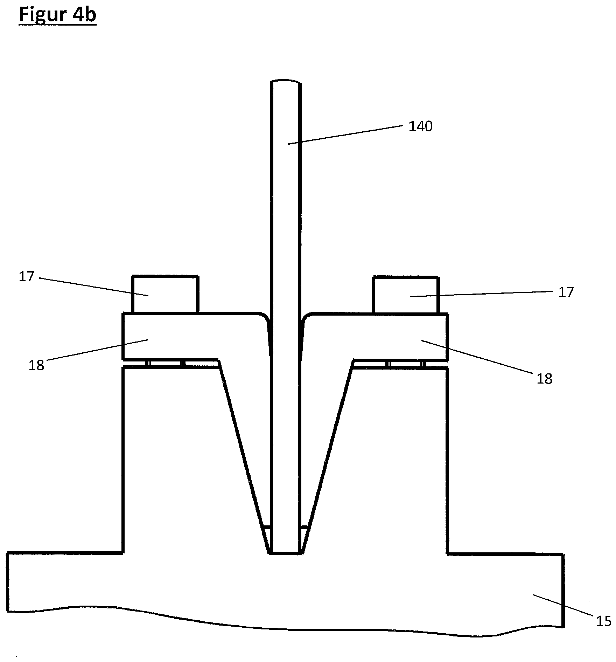

In Figur 4 umfassend die Figuren 4a und 4b ist eine weitere Ausführungsform eines erfindungsgemäßen Biegegelenks 1 in einer Prinzipdarstellung dargestellt. In Figur 4b ist zur Illustrierung der Realisierung der starren Verbindung zwischen den einzelnen Elementen des Biegegelenks 1 der Übergang zwischen dem Befestigungsabschnitt 15 und dem zweiten Biegeelement 140 vergrößert dargestellt.

Die Ausführungsform gemäß Figur 4 entspricht in weiten Teilen der Ausführungsform gemäß Figur 3 und unterscheidet sich von dieser lediglich dadurch, dass die starre Verbindung zwischen den einzelnen Elementen anders realisiert ist, was zu entsprechend unterschiedlichen Ausgestaltungen von Montageelement 11, Zwischenabschnitt 13 und Befestigungsabschnitt 15 sowie dem Vorsehen von anderen Befestigungsvorrichtungen führt. Bei der Ausführungsform gemäß Figur 4 weisen Montageelement 11 und Befestigungsabschnitt 15, die vorliegend identisch ausgebildet sind, jeweils eine V-förmige Aussparung auf, wohingegen der Zwischenabschnitt 13 zwei V-förmige Aussparungen aufweist, die um 90° um die axiale Richtung A verdreht zueinander verlaufen und die mit den Spitzen ihrer V-Form aufeinander zuweisen. Das erste Biegeelement 120 ist in der V-förmigen Aussparung des Montageelements 11 und in einer ersten V-förmigen Aussparung des Zwischenabschnitts 13 angeordnet und durch Klemmelemente 18, die jeweils an beiden Seiten des Biegeelements 120 in der jeweiligen V-förmigen Aussparung angeordnet sind, mit dem Montageelement 11 und dem Zwischenabschnitt 13 verklemmt. Entsprechend ist das zweite Biegeelement 140 in der zweiten V-förmigen Aussparung des Zwischenabschnitts 13 und in der V-förmigen Aussparung des Befestigungsabschnitts 15 angeordnet und über entsprechende Klemmelemente 18 mit dem Zwischenabschnitt 13 und dem Befestigungsabschnitt 15 verklemmt. Die Realisierung der Verklemmung der Biegeelemente 120, 140 in Montageelement 11, Zwischenabschnitt 13 und Befestigungsabschnitt 15 ist in Figur 4b illustriert. Die Klemmelemente 18 sind jeweils als Winkel ausgebildet, dessen einer Schenkel keilförmig ausgebildet ist und in der V-förmigen Aussparung neben dem zweiten Biegeelement 140 angeordnet ist. Über den zweiten Schenkel des Winkels sind die Klemmelemente 18 jeweils mit dem Befestigungsabschnitt 15 verschraubt, der hierzu eine Gewindebohrung aufweist. Die Klemmelemente 18 werden in die V-förmige Aussparung neben das zweite Biegeelement 140 mit Kraftaufwand eingeführt, insbesondere gepresst oder geschlagen, wodurch sie einen Anpressdruck auf das zweite Biegeelement 140 erzeugen. Nach dem Einführen wird die Position der Klemmelemente 18 in der V-förmigen Aussparung über die Schrauben 17 gesichert. Mit ihren keilförmigen Schenkeln liegen die Klemmelemente 18 somit sowohl an dem Befestigungsabschnitt 15 als auch an dem zweiten Biegeelement 140 an, so dass ein Kraftschluss zwischen dem zweiten Biegeelement 140 und jedem der beiden Klemmelemente 18 sowie ein Kraftschluss zwischen jedem der Klemmelemente 18 und dem Befestigungsabschnitt 15 innerhalb der V-förmigen Aussparung hergestellt ist. Über diesen Kraftschluss, dessen Stärke über den Kraftaufwand bei dem Einführen der Klemmelemente 18 eingestellt werden kann, ist das zweite Biegeelement 140 so mit den Klemmelementen 18 und dem Befestigungsabschnitt 15 verbunden, dass bei dem bestimmungsgemäßen Einsatz des erfindungsgemäßen Biegegelenks 1 in einer erfindungsgemäßen Dämpfungseinrichtung, die zwischen zwei Bauelemente montiert ist, keine Relativbewegung der einzelnen Elemente des Biegegelenks 1 an ihren Verbindungsstellen eintritt, wenn die beiden Bauelemente Relativbewegungen ausführen. Wie zu Figur 3 erläutert weisen auch die Klemmelemente 18 an ihrem von dem Befestigungsabschnitt 15 wegweisenden axialen Ende, mit dem sie an dem zweiten Biegeelement 140 anliegen, eine abgerundete Kante auf, so dass eine übermäßige Belastung des Biegeelements 140 effektiv vermieden wird.

Wie aus den Figuren 1 bis 4 für den Fachmann erkennbar, sind das Montageelement 11 und der Befestigungsabschnitt 15 der dargestellten Ausführungsformen jeweils so ausgebildet, dass sie an einem Bauelement bzw. einem Axialdämpfer auf einfache Weise fixiert werden können. Hierzu weisen Montageelement 11 und Befestigungsabschnitt 15 der Ausführungsformen gemäß den Figuren 1 bis 3 jeweils einen Fixierungsabschnitt auf, der jeweils senkrecht zur axialen Richtung A versetzt zu dem an dem Montageelement 11 bzw. dem Befestigungsabschnitt 15 jeweils angeordneten Biegeabschnitt 12, 14 angeordnet ist. In dem Fixierungsabschnitt sind Durchführungen vorgesehen, durch die Schrauben geführt werden können zum Fixieren des Montageelements 11 an einem Bauelement bzw. des Befestigungsabschnitts 15 an einem Axialdämpfer. Dagegen weisen das Montageelement 11 und der Befestigungsabschnitt 15 der Ausführungsform gemäß Figur 4 jeweils eine Anschlussbohrung 19 auf, die als Gewindebohrung ausgebildet ist. Über die Anschlussbohrung 19, die entlang der axialen Richtung verläuft und am Biegegelenk 1 senkrecht zur axialen Richtung zentral angeordnet ist, kann das Biegegelenk 1 auf einfache Weise an einem Bauelement bzw. Axialdämpfer fixiert werden, beispielsweise über Aufschrauben auf einen an dem Bauelement bzw. Axialdämpfer angeordneten Gewindebolzen. Das Vorsehen der Anschlussbohrung 19 ermöglicht eine besonders platzsparende Ausgestaltung des Biegegelenks 1. Die mit Bezug auf die einfache Fixierbarkeit des Biegegelenks erläuterten Ausbildungen der beschriebenen Biegegelenke 1 können allgemein für ein erfindungsgemäßes Biegegelenk vorteilhaft sein.

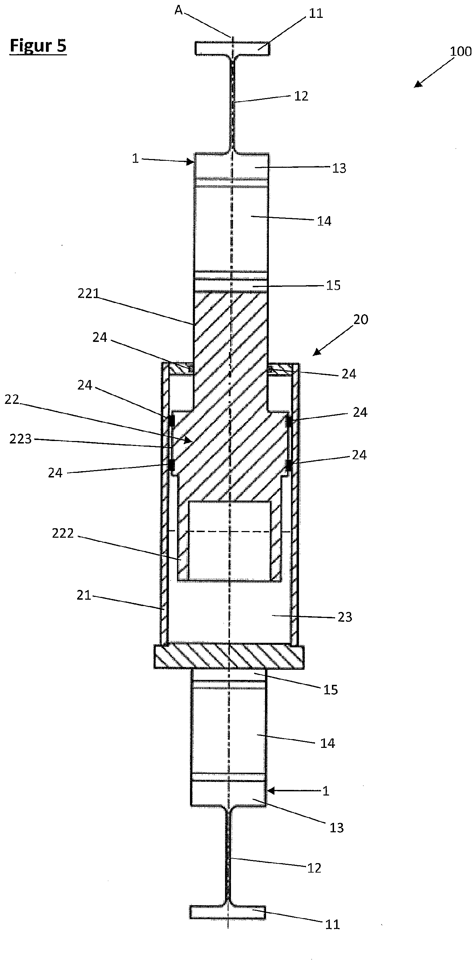

In Figur 5 ist eine Ausführungsform einer erfindungsgemäßen Dämpfungseinrichtung 100 dargestellt, deren Axialdämpfer 20 als Viskosedämpfer ausgebildet ist. Der Axialdämpfer 20 umfasst ein Gehäuse 21 sowie einen Kolben 22, der innerhalb eines Verschiebebereichs axial zum Gehäuse 21 verschiebbar angeordnet ist. Der Kolben 22 weist einen ersten Kolbenabschnitt 221 auf, der in jeder Position des Kolbens 22 innerhalb des Verschiebebereichs außerhalb des Gehäuses 21 angeordnet ist, sowie einen zweiten Kolbenabschnitt 222, der in jeder Position des Kolbens 22 innerhalb des Verschiebebereichs in eine viskose Flüssigkeit 23 eingetaucht ist, die in dem Gehäuse 21 vorgesehen ist. Die viskose Flüssigkeit 23 ist bei der in Figur 5 dargestellten Dämpfungseinrichtung 100 bis zu der gestrichelt eingezeichneten Füllstandshöhe in dem Gehäuse 21 angeordnet. Der Kolben 22 weist ferner einen dritten Kolbenabschnitt 223 auf, der axial zwischen dem ersten Kolbenabschnitt 221 und dem zweiten Kolbenabschnitt 222 angeordnet ist. Der Kolben 22 ist über eine Führung, die drei Führungsbänder 24 umfasst, so geführt, dass der Kolben 22 zuverlässig ohne Schleifkontakt zum Gehäuse 22 bewegt werden kann. Dabei sind zwei der Führungsbänder 24 zwischen dem dritten Kolbenabschnitt 223 und dem Gehäuse 22 vorgesehen. Vorliegend ist das Gehäuse 21 nach Art eines Hohlzylinders ausgebildet, dessen Zylinderachse in axialer Richtung A verläuft, während der Kolben 22 in seinem dritten Kolbenabschnitt 223 als Vollzylinder ausgebildet ist, dessen Achse ebenfalls entlang der axialen Richtung A verläuft und dessen Durchmesser nur geringfügig kleiner als der Durchmesser des Hohlzylinders des Gehäuses 21 ist. Der Kolben 22 bildet an seinem ersten axialen Ende, an dem der erste Kolbenabschnitt 221 angeordnet ist, das erste Anschlusselement aus. Das erste Anschlusselement ist demzufolge stets in jeder Position des Kolbens 22 relativ zum Gehäuse 21 außerhalb des Gehäuses 21 und axial von dem ersten axialen Ende des Gehäuses beabstandet angeordnet. Das Gehäuse 21 bildet an seinem zweiten axialen Ende, das seinem ersten axialen Ende und dem ersten Anschlusselement axial gegenüberliegt, das zweite Anschlusselement aus. An dem ersten Anschlusselement ist ein erstes Biegegelenk 1 befestigt, an dem zweiten Anschlusselement ein zweites Biegegelenk 1. Die verwendeten Biegegelenke 1 sind jeweils identisch ausgebildet und gemäß der in Figur 1 dargestellten Ausführungsform des erfindungsgemäßen Biegegelenks 1 ausgebildet.

Dem Fachmann ist aus Figur 5 die Funktionsweise der erfindungsgemäßen Dämpfungseinrichtung 100 klar ersichtlich. Aufgrund des starren axialen Verhaltens der Biegegelenke 1, die an erstem und zweitem Anschlusselement des Axialdämpfers 20 angeordnet sind, wird jede relative Kraftbelastung entlang der axialen Richtung A zwischen den Montageelementen 11 der beiden Biegegelenke 1 unmittelbar in eine relative axiale Krafteinwirkung zwischen Kolben 22 und Gehäuse 21 umgesetzt, so dass der Kolben 22 sich axial relativ zum Gehäuse 21 bewegt. Da der Kolben 22 mit seinem zweiten Kolbenabschnitt 222 stets in die viskose Flüssigkeit 23 eingetaucht ist, erfolgt aufgrund der Oberflächenbenetzung des Kolbens 22 in seinem zweiten Kolbenabschnitt 222 durch die viskose Flüssigkeit 23 aufgrund der Scherung des viskosen Flüssigkeit 23 bei einer axialen Verschiebung des Kolbens 22 relativ zum Gehäuse 21 unmittelbar eine Dämpfung der axialen Relativbewegung zwischen den Montageelementen 11 der Biegegelenke 1. Dagegen wird eine relative Krafteinwirkung zwischen den Montageelementen 11 der beiden Biegegelenke 1 senkrecht zur axialen Richtung A in eine Verbiegung der Biegegelenke 1 in zumindest jeweils einem ihrer Biegeabschnitte 12, 14 umgewandelt, so dass der Axialdämpfer 20 an seinen Anschlusselementen nicht durch eine übermäßig hohe Kraft senkrecht zur axialen Richtung A belastet wird.

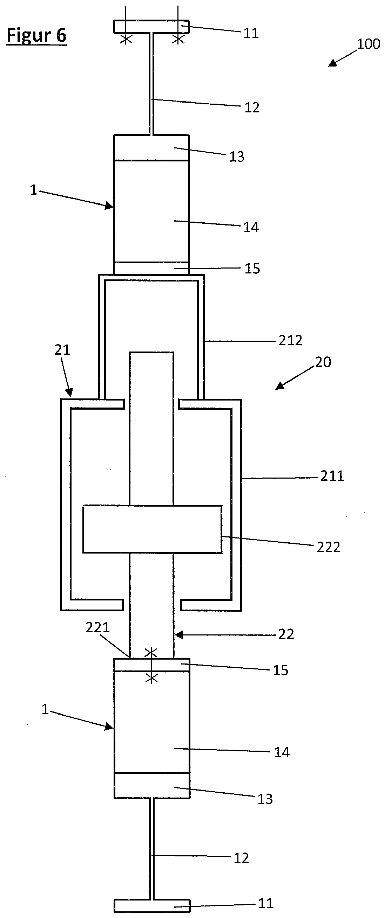

In Figur 6 ist eine weitere Ausführungsform einer erfindungsgemäßen Dämpfungseinrichtung 100 dargestellt. In dieser Ausführungsform ist - ähnlich zu der Ausführungsform gemäß Figur 5 - ein Kolben 22 axial in einem Verschiebebereich beweglich zu einem Gehäuse 21 angeordnet. Das Gehäuse umfasst eine Arbeitskammer 211 und eine Aufnahmekammer 212. Bei der Ausführungsform gemäß Figur 6 ist ein viskoelastisches Medium 25 so in der Arbeitskammer 211 des Gehäuses 21 angeordnet, dass es das gesamte, nicht von dem Kolben 22 besetzte Volumen in der Arbeitskammer 211 füllt. Das viskoelastische Medium 25 stellt somit ein viskoses Medium des Axialdämpfers 20 der Dämpfungseinrichtung 100 dar, in das der Kolben 22 mit seinem zweiten Kolbenabschnitt 222 in jeder seiner möglichen Positionen angeordnet ist. Dagegen ist der erste Kolbenabschnitt 221 in jeder möglichen Position des Kolbens 22 relativ zum Gehäuse 21 stets außerhalb des Gehäuses 21 angeordnet. Der Einfachheit halber sind in Figur 6 Dichtungen und Führungsbänder zum abdichtenden Führen des Kolbens 22 zum Gehäuse 21, deren Ausgestaltung und Anordnung dem Fachmann bekannt sind, nicht dargestellt.

Aus Figur 6 ist ersichtlich, dass - wie zu Figur 5 erläutert - der Kolben 22 an seinem ersten axialen Ende an seinem ersten Kolbenabschnitt 221 ein erstes Anschlusselement ausbildet, an dem ein erstes Biegegelenk 1 befestigt ist, während das Gehäuse an seinem zweiten axialen Ende, das dem ersten axialen Ende des Gehäuses 21, an dem das erste Anschlusselement angeordnet ist, gegenüberliegt, das zweite Anschlusselement ausbildet. Das zweite Anschlusselement ist dabei an der Aufnahmekammer 212 des Gehäuses 21 angeordnet, die axial neben der Arbeitskammer 211 angeordnet ist und die zur Aufnahme des Kolbenabschnitts, der über das zweite axiale Ende der Arbeitskammer 211 hinausragt, ausgebildet ist. Das erste axiale Ende des Gehäuses 21 ist somit durch das erste axiale Ende der Arbeitskammer 211 und das zweite Ende des Gehäuses 21 ist durch das zweite axiale Ende der Aufnahmekammer 212 gebildet. Das zweite axiale Ende der Arbeitskammer 211 liegt an dem ersten axialen Ende der Aufnahmekammer 212 an. Auch an das zweite Anschlusselement ist ein Biegegelenk 1 angeschlossen.

Die Dämpfungseinrichtung 100 gemäß Figur 6 weist somit dieselben erfindungsgemäßen vorteilhaften Eigenschaften mit Bezug auf die axiale Dämpfung und die Belastbarkeit der Dämpfungseinrichtung 100 durch eine Kraft senkrecht zur axialen Richtung A auf, wie sie zur Dämpfungseinrichtung 100 gemäß Figur 5 beschrieben wurden. Allerdings unterscheiden sich die Dämpfungseinrichtungen 100 von Figur 5 und Figur 6 in der Funktionsweise ihres Axialdämpfers 20. Je nach erwartetem axialen Verschiebeweg, axialer Verschiebefrequenz und axialer Verschiebekraft, die für eine bestimmte Anwendung einer erfindungsgemäßen Dämpfungseinrichtung 100 erwartet wird, kann eine erfindungsgemäße Dämpfungseinrichtung 100 mit einem entsprechend vorteilhaft ausgebildeten Axialdämpfer 20 eingesetzt werden. Wie für den Fachmann ersichtlich, können die in den Figuren 5 und 6 dargestellten Ausführungsformen der Dämpfungseinrichtung 100 selbstverständlich so ausgebildet sein, dass sie jeweils nur ein Biegelenk 1 umfassen. Ferner können diese Ausführungsformen selbstverständlich zumindest ein Biegegelenk 1 aufweisen, das die beschriebenen vorteilhaften Merkmale eines erfindungsgemäßen Biegegelenks 1 aufweist, wobei sie insbesondere zumindest ein Biegegelenk 1 gemäß einer der Figuren 1 bis 4 aufweisen können.

### Bezugszeichenliste

- 1: Biegegelenk
- 11: Montageelement
- 12: erster Biegeabschnitt
- 13: Zwischenabschnitt
- 14: zweiter Biegeabschnitt
- 15: Befestigungsabschnitt
- 16: Winkelelement
- 17: Schraube
- 18: Klemmelement
- 19: Anschlussbohrung
- 20: Axialdämpfer
- 21: Gehäuse
- 22: Kolben
- 23: viskose Flüssigkeit
- 24: Führungsband
- 25: viskoelastisches Medium
- 100: Dämpfungseinrichtung
- 110: Fixerflansch
- 120: erstes Biegeelement
- 130: Fixierflansch
- 140: zweites Biegeelement
- 150: Fixierflansch
- 161: Anpressabschnitt
- 162: Stützabschnitt
- 211: Arbeitskammer
- 212: Aufnahmekammer
- 221: erster Kolbenabschnitt
- 222: zweiter Kolbenabschnitt
- 223: dritter Kolbenabschnitt
- A: axiale Richtung

## Patentansprüche

1. Dämpfungseinrichtung (100) zur Montage zwischen zwei separaten Bauelementen zum Dämpfen von Schwingungen zwischen den Bauelementen, wobei die Dämpfungseinrichtung (100) einen Axialdämpfer (20) umfassend ein erstes Anschlusselement sowie ein zweites Anschlusselement aufweist, wobei das erste Anschlusselement mit dem zweiten Anschlusselement über einen Dämpfungsabschnitt verbunden ist unter Gewährleistung einer axialen Relativbewegung der beiden Anschlusselemente zueinander, wobei der Dämpfungsabschnitt zum Dämpfen der axialen Relativbewegung zwischen den Anschlusselementen ausgebildet ist,
**dadurch gekennzeichnet, dass**
die Dämpfungseinrichtung (100) ein Biegegelenk (1) umfasst, das an einem der Anschlusselemente befestigt ist, wobei das Biegegelenk (1) ein Montageelement (11) zur Montage an einem der Bauelemente aufweist, wobei das Biegegelenk (1) einen Gelenkabschnitt aufweist, der als in sich starr zusammenhängendes Bauteil ausgebildet ist und sich axial zwischen dem an dem Biegegelenk (1) befestigten Anschlusselement und dem Montageelement (11) erstreckt, wobei das Biegegelenk (1) in seinem Gelenkabschnitt um zumindest eine Rotationsachse, die senkrecht auf der axialen Richtung steht, elastisch biegbar ist, wobei der Gelenkabschnitt zumindest einen axialen Biegeabschnitt (12, 14) aufweist, dem genau eine Rotationsachse senkrecht zur axialen Richtung (A) zugeordnet ist und der sich gegenüber einer Biegebelastung, die durch eine an seinen axialen Enden anliegende relative Kraft mit einer Kraftrichtung entlang seiner Rotationsachse auf ihn wirkt, starr verhält, wobei der Biegeabschnitt eine Form nach Art einer Platte aufweist, deren flächige Erstreckung durch die axiale Richtung (A) und durch die ihm zugeordnete Rotationsachse festgelegt ist, wobei der Biegeabschnitt eine Erstreckungslänge in einer Richtung senkrecht zur axialen Richtung und senkrecht zu der dem Biegeabschnitt zugeordneten Rotationsachse aufweist, die weniger als 5 % der axialen Erstreckungslänge des Biegeabschnitts beträgt, und wobei der Biegeabschnitt eine Erstreckungslänge entlang der ihm zugeordneten Rotationsachse aufweist, die mindestens das Vierfache der Erstreckungslänge des Biegeabschnitts in der Richtung beträgt, die senkrecht zu der ihm zugeordneten Rotationsachse und senkrecht zur axialen Richtung steht, wobei der Gelenkabschnitt des Biegegelenks (1) aus Vollmaterial besteht.

2. Dämpfungseinrichtung (100) nach Anspruch 1,
**dadurch gekennzeichnet, dass**
der Axialdämpfer (20) und das Biegegelenk (1) als voneinander getrennte Bauteile der Dämpfungseinrichtung (100) ausgebildet sind, wobei das Biegegelenk (1) einen Befestigungsabschnitt (15) aufweist, mit dem es an dem Anschlusselement befestigt ist.

3. Dämpfungseinrichtung (100) nach einem der vorangehenden Ansprüche,
**dadurch gekennzeichnet, dass**
die Dämpfungseinrichtung (100) ein erstes Biegegelenk (1) umfasst, das an dem ersten Anschlusselement befestigt ist, und ein zweites Biegegelenk (1), das an dem zweiten Anschlusselement befestigt ist.

4. Dämpfungseinrichtung (100) nach einem der vorangehenden Ansprüche,
**dadurch gekennzeichnet, dass**
das Biegegelenk (1) so ausgebildet ist, dass eine Verbiegung des Biegegelenks (1) bei einer Belastung des Montageelements (11) relativ zum Anschlusselement mit einer Kraft senkrecht zur axialen Richtung (A) und senkrecht zu der dem Biegeabschnitt (12, 14) zugeordneten Rotationsachse ausschließlich innerhalb der axialen Erstreckung des Biegeabschnitts (12, 14) erfolgt.

5. Dämpfungseinrichtung (100) nach einem der vorangehenden Ansprüche,
**dadurch gekennzeichnet, dass**
der Gelenkabschnitt einen ersten Biegeabschnitt (12) und einen zweiten Biegeabschnitt (14) aufweist, die in der axialen Richtung (A) hintereinander angeordnet sind, wobei das Biegegelenk (1) in seinem ersten Biegeabschnitt (12) um eine erste Rotationsachse, die senkrecht auf der axialen Richtung (A) steht, und in seinem zweiten Biegeabschnitt (14) um eine zweite Rotationsachse, die senkrecht auf der axialen Richtung (A) und auf der ersten Rotationsachse steht, biegbar ist.

6. Dämpfungseinrichtung (100) nach Anspruch 5,
**dadurch gekennzeichnet, dass**
in axialer Richtung (A) zwischen dem ersten Biegeabschnitt (12) und dem zweiten Biegeabschnitt (14) ein starrer Zwischenabschnitt (13) vorgesehen ist, der die Biegeabschnitte (12, 14) verbindet.

7. Dämpfungseinrichtung (100) nach Anspruch 6,
**dadurch gekennzeichnet, dass**
der Zwischenabschnitt (13) in allen drei Raumrichtungen eine Erstreckungslänge aufweist, die mindestens das Vierfache der jeweiligen Erstreckungslänge der Biegeabschnitte (12, 14) entlang der Richtung senkrecht zur axialen Richtung (A) und senkrecht zu ihrer jeweiligen Rotationsachse beträgt.

8. Dämpfungseinrichtung (100) nach einem der vorangehenden Ansprüche,
**dadurch gekennzeichnet, dass**
der zumindest eine Biegeabschnitt (12, 14) aus nur einem Material besteht, wobei das Material in dem Biegeabschnitt (12, 14) eine Stärke in einer Richtung senkrecht zur axialen Richtung (A) und senkrecht zu der dem Biegeabschnitt (12, 14) zugeordneten Rotationsachse aufweist, die weniger als 5 %, insbesondere weniger als 3 % der axialen Erstreckungslänge des Biegegelenks (1), insbesondere weniger als 5% der axialen Erstreckungslänge des Biegeabschnitts (12, 14), beträgt,
und/oder dass
die Erstreckungslänge des zumindest einen Biegeabschnitts (12, 14) entlang der ihm zugeordneten Rotationsachse mindestens das Doppelte, insbesondere mindestens das Vierfache der Erstreckungslänge des Biegeabschnitts (12, 14) senkrecht zu der ihm zugeordneten Rotationsachse und senkrecht zur axialen Richtung (A) beträgt.

9. Dämpfungseinrichtung (100) nach einem der vorangehenden Ansprüche,
**dadurch gekennzeichnet, dass**
das Biegegelenk (1) aus einem einzigen Material einstückig hergestellt ist.

10. Dämpfungseinrichtung (100) nach einem der vorangehenden Ansprüche,
**dadurch gekennzeichnet, dass**
das Biegegelenk (1) einen ersten Flansch aufweist, mit dem es an dem ersten oder zweiten Anschlusselement befestigt ist, sowie einen zweiten Flansch, der das Montageelement (11) des Biegegelenks (1) bildet.

11. Dämpfungseinrichtung (100) nach einem der vorangehenden Ansprüche,
**dadurch gekennzeichnet, dass**
der Axialdämpfer (20) als Viskosedämpfer ausgebildet ist, der ein Gehäuse (21) und einen Kolben (22) aufweist, wobei der Kolben (22) zu dem Gehäuse (21) innerhalb eines Verschiebebereichs axial verschiebbar angeordnet ist, wobei in dem Gehäuse (21) ein viskoses Medium (23, 25) vorgesehen ist, wobei der Kolben (22) in jeder Position innerhalb des Verschiebereichs sowohl mit einem ersten axialen Kolbenabschnitt (221) außerhalb des Gehäuses (21) angeordnet ist und damit über ein erstes axiales Ende des Gehäuses (21) vorsteht als auch mit einem zweiten axialen Kolbenabschnitt (222) innerhalb des Gehäuses (21) angeordnet ist und abschnittsweise in das viskose Medium (23, 25) eingetaucht ist, wobei an dem ersten axialen Ende des Kolbens (22) das erste Anschlusselement und an dem zweiten axialen Ende des Gehäuses (22) das zweite Anschlusselement angeordnet ist.

12. System umfassend zumindest zwei Dämpfungseinrichtungen (100) nach einem der vorangehenden Ansprüche,
**dadurch gekennzeichnet, dass**
die axiale Richtung (A) einer ersten Dämpfungseinrichtung (100) mit der axialen Richtung (A) einer zweiten Dämpfungseinrichtung (100) einen Winkel von mindestens 30°, insbesondere von 60° bis 120°, bildet.

13. Verwendung eines Biegegelenks (1), das einen Befestigungsabschnitt (15), ein in axialer Richtung (A) von dem Befestigungsabschnitt (15) beabstandetes Montageelement (11) und einen den Befestigungsabschnitt (15) mit dem Montageelement (11) verbindenden, als in sich starr zusammenhängendes Bauteil ausgebildeten Gelenkabschnitt aufweist, wobei der Gelenkabschnitt um zumindest eine Rotationsachse senkrecht zur axialen Richtung (A) elastisch biegbar ist, zum Montieren eines Axialdämpfers (20), der zum Dämpfen von Relativbewegungen von zwei Bauelementen zueinander in der axialen Richtung (A) ausgebildet ist, an eines der Bauelemente, wobei der Gelenkabschnitt des Biegegelenks (1) zumindest einen axialen Biegeabschnitt (12, 14) aufweist, dem genau eine Rotationsachse senkrecht zur axialen Richtung (A) zugeordnet ist und der sich gegenüber einer Biegebelastung, die durch eine an seinen axialen Enden anliegende relative Kraft mit einer Kraftrichtung entlang seiner Rotationsachse auf ihn wirkt, starr verhält, wobei der Biegeabschnitt eine Form nach Art einer Platte aufweist, deren flächige Erstreckung durch die axiale Richtung (A) und durch die ihm zugeordnete Rotationsachse festgelegt, wobei der Biegeabschnitt eine Erstreckungslänge in einer Richtung senkrecht zur axialen Richtung und senkrecht zu der dem Biegeabschnitt zugeordneten Rotationsachse aufweist, die weniger als 5 % der axialen Erstreckungslänge des Biegeabschnitts beträgt, und wobei der Biegeabschnitt eine Erstreckungslänge entlang der ihm zugeordneten Rotationsachse aufweist, die mindestens das Vierfache der Erstreckungslänge des Biegeabschnitts in der Richtung beträgt, die senkrecht zu der ihm zugeordneten Rotationsachse und senkrecht zur axialen Richtung steht, wobei der Gelenkabschnitt des Biegegelenks (1) aus Vollmaterial besteht, und wobei das Biegegelenk (1) mit seinem Befestigungsabschnitt (15) an dem Axialdämpfer (20) und mit seinem Montageelement (11) an dem Bauelement befestigt wird.

14. Biegegelenk (1) zur Verwendung in einer Dämpfungseinrichtung (100) nach einem der Ansprüche 1 bis 11,
**dadurch gekennzeichnet, dass**
das Biegegelenk (1) einen Befestigungsabschnitt (15) aufweist, über den es an eines der beiden Anschlusselemente des Axialdämpfers (20) montierbar ist, wobei das Biegegelenk (1) ein Montageelement (11) zur Montage an einem der Bauelemente aufweist, wobei das Biegegelenk (1) einen Gelenkabschnitt aufweist, der als in sich starr zusammenhängendes Bauteil ausgebildet ist und sich axial zwischen dem Befestigungsabschnitt (15) und dem Montageelement (11) erstreckt, wobei das Biegegelenk (1) in seinem Gelenkabschnitt um zumindest eine Rotationsachse, die senkrecht auf der axialen Richtung (A) steht, elastisch biegbar, ist, wobei der Gelenkabschnitt zumindest einen axialen Biegeabschnitt (12, 14) aufweist, dem genau eine Rotationsachse senkrecht zur axialen Richtung (A) zugeordnet ist und der sich gegenüber einer Biegebelastung, die durch eine an seinen axialen Enden anliegende relative Kraft mit einer Kraftrichtung entlang seiner Rotationsachse auf ihn wirkt, starr verhält, wobei der Biegeabschnitt eine Form nach Art einer Platte aufweist, deren flächige Erstreckung durch die axiale Richtung (A) und durch die ihm zugeordnete Rotationsachse festgelegt ist, wobei der Biegeabschnitt eine Erstreckungslänge in einer Richtung senkrecht zur axialen Richtung und senkrecht zu der dem Biegeabschnitt zugeordneten Rotationsachse aufweist, die weniger als 5 % der axialen Erstreckungslänge des Biegeabschnitts beträgt, und wobei der Biegeabschnitt eine Erstreckungslänge entlang der ihm zugeordneten Rotationsachse aufweist, die mindestens das Vierfache der Erstreckungslänge des Biegeabschnitts in der Richtung beträgt, die senkrecht zu der ihm zugeordneten Rotationsachse und senkrecht zur axialen Richtung steht, wobei der Gelenkabschnitt des Biegegelenks (1) aus Vollmaterial besteht.

15. Verfahren zum Montieren eines zum Dämpfen von Relativbewegungen in einer axialen Richtung (A) zwischen zwei Bauelementen ausgebildeten Axialdämpfers (20) zwischen den beiden Bauelementen, wobei an einem axialen Ende des Axialdämpfers (20) ein axiales Ende eines Biegegelenks (1) befestigt wird, das einen Gelenkabschnitt aufweist, in dem es um zumindest eine Rotationsachse, die senkrecht auf der axialen Richtung (A) steht, elastisch biegbar ist, wobei der Gelenkabschnitt zumindest einen axialen Biegeabschnitt (12, 14) aufweist, dem genau eine Rotationsachse senkrecht zur axialen Richtung (A) zugeordnet ist und der sich gegenüber einer Biegebelastung, die durch eine an seinen axialen Enden anliegende relative Kraft mit einer Kraftrichtung entlang seiner Rotationsachse auf ihn wirkt, starr verhält, wobei der Biegeabschnitt eine Form nach Art einer Platte aufweist, deren flächige Erstreckung durch die axiale Richtung (A) und durch die ihm zugeordnete Rotationsachse festgelegt ist, wobei der Biegeabschnitt eine Erstreckungslänge in einer Richtung senkrecht zur axialen Richtung und senkrecht zu der dem Biegeabschnitt zugeordneten Rotationsachse aufweist, die weniger als 5 % der axialen Erstreckungslänge des Biegeabschnitts beträgt, und wobei der Biegeabschnitt eine Erstreckungslänge entlang der ihm zugeordneten Rotationsachse aufweist, die mindestens das Vierfache der Erstreckungslänge des Biegeabschnitts in der Richtung beträgt, die senkrecht zu der ihm zugeordneten Rotationsachse und senkrecht zur axialen Richtung steht, wobei der Gelenkabschnitt des Biegegelenks (1) aus Vollmaterial besteht, wobei das andere axiale Ende des Biegegelenks (1) an einem der Bauelemente befestigt wird.

## Claims

1. Damping device (100) for mounting two separate components for damping oscillations between the components, wherein the damping device (100) has an axial damper (20) that comprises a first connecting element as well as a second connecting element, wherein the first connecting element is connected to the second connecting element by a damping section by allowing an axial relative movement of the two connecting elements with respect to one another, wherein the damping section is designed for damping the axial relative movement between the connecting elements,
**characterized in that**
the damping device (100) comprises a bending joint (1) that is fastened to one of the connecting elements, wherein the bending joint (1) has a mounting element (11) for mounting on one of the components, wherein the bending joint (1) has a joint section that is designed as a continuous rigidly interconnected component and that extends axially between the connecting element fixed to the bending joint (1) and the mounting element (11), wherein the bending joint (1) can be resiliently bent in its joint section about at least one axis of rotation that is perpendicular to the axial direction, wherein the joint section has at least one axial bending section (12, 14) that is associated to exactly one axis of rotation perpendicularly to the axial direction (A) and that remains rigid with respect to a bending stress that is exerted on itself by a relative force applied at its axial ends with a direction of force along its axis of rotation, wherein the bending section has a shape in the manner of a plate, the planar extension of which is fixed by the axial direction (A) and by the axis of rotation associated thereto, wherein the bending section has a length of extension in a direction perpendicular to the axial direction and perpendicular to the axis of rotation associated to the bending section that is less than 5% of the axial length of extension of the bending section and wherein the bending section has a length of extension along its associated axis of rotation that is at least four times bigger than the length of extension of the bending section in the direction that is perpendicular to its associated axis of rotation and perpendicular to the axial direction, wherein the joint section of the bending joint (1) is made from full material.

2. Damping device (100) according to claim 1, **characterized in that** the axial damper (20) and the bending joint (1) are designed as separate components of the damping device (100), wherein the bending joint (1) has a fastening section (15) with which it is fastened to the connecting element.

3. Damping device (100) according to one of the preceding claims, **characterized in that** the damping device (100) comprises a first bending joint (1) that is fixed to the first connecting element and a second bending joint (1) that is fixed to the second connecting element.

4. Damping device (100) according to one of the preceding claims, **characterized in that** the bending joint (1) is designed in such a manner that, in case of a stress of the mounting element (11) relative to the connecting element with a force perpendicular to the axial direction (A) and perpendicular to the axis of rotation associated to the bending section (12, 14), a bending of the bending joint (1) takes place exclusively within the axial extension of the bending section (12, 14).

5. Damping device (100) according to one of the preceding claims, **characterized in that** the joint section has a first bending section (12) and a second bending section (14) that are placed the one behind the other in the axial direction (A), wherein the bending joint (1) can be bent in its first bending section (12) about a first axis of rotation that is perpendicular to the axial direction (A) and in its second bending section (14) about a second axis of rotation that is perpendicular to the axial direction (A) and to the first axis of rotation.

6. Damping device (100) according to claim 5, **characterized in that** a rigid intermediate section (13) that connects the bending sections (12, 14) is provided in the axial direction (A) between the first bending section (12) and the second bending section (14).

7. Damping device (100) according to claim 6, **characterized in that** the intermediate section (13) has a length of extension in all three dimensions that is at least four times the respective length of extension of the bending sections (12, 14) along the direction perpendicularly to the axial direction (A) and perpendicularly to their respective axis of rotation.

8. Damping device (100) according to one of the preceding claims, **characterized in that** the at least one bending section (12, 14) is made of only one material, wherein the material in the bending section (12, 14) has a thickness in a direction perpendicular to the axial direction (A) and perpendicular to the axis of rotation associated to the bending section (12, 14) that is less than 5%, in particular less than 3% of the axial length of extension of the bending joint, (1), in particular less than 5% of the length of extension of the bending section (12, 14)
and/or that
the length of extension of the at least one bending section (12, 14) along its associated axis of rotation is at least twice, in particular at least four times bigger than the length of extension of the bending section (12, 14) perpendicularly to its associated axis of rotation and perpendicularly to the axial direction (A).

9. Damping device (100) according to one of the preceding claims, **characterized in that** the bending joint (1) is made in one piece of one single material.

10. Damping device (100) according to one of the preceding claims, **characterized in that** the bending joint (1) has a first flange with which it is fixed to the first or to the second connecting element as well as a second flange that forms the mounting element (11) of the bending joint (1).

11. Damping device (100) according to one of the preceding claims, **characterized in that** the axial damper (20) is designed as a viscous damper that has a housing (21) and a piston (22), wherein the piston (22) is placed axially displaceable with respect to the housing (21) within a range of displacement, wherein a viscous medium (23, 25) is provided in the housing (21), wherein the piston (22) is placed in any position within the range of displacement both with a first axial piston section (221) outside the housing (21) protruding herewith over a first axial end of the housing (21) and with a second axial piston section (222) inside the housing (21) being immersed in sections in the viscous medium (23, 25), wherein the first connecting element is placed at the first axial end of the piston (22) and the second connecting element is placed at the second axial end of the housing (22).

12. System comprising at least two damping devices (100) according to one of the preceding claims, **characterized in that** the axial direction (A) of a first damping device (100) forms with the axial direction (A) of a second damping device (100) an angle of at least 30°, in particular of 60° to 120°.

13. Use of a bending joint (1) that has a fastening section (15), a mounting element (11) spaced in the axial direction (A) from the fastening section (15) and a joint section that connects the fastening section (15) with the mounting element (11) that is designed as a continuous rigidly interconnected component, wherein the joint section can be resiliently bent about at least one axis of rotation perpendicularly to the axial direction (A), for mounting an axial damper (20) that is designed for damping relative movements of two components to one another in the axial direction (A), wherein the joint section of the bending joint (1) has at least one axial bending section (12, 14) that is associated to exactly one axis of rotation perpendicularly to the axial direction (A) and that remains rigid with respect to a bending stress that is exerted on itself by a relative force applied at its axial ends with a direction of force along its axis of rotation, wherein the bending section has a shape in the manner of a plate, the planar extension of which is fixed by the axial direction (A) and by the axis of rotation associated thereto, wherein the bending section has a length of extension in a direction perpendicular to the axial direction and perpendicular to the axis of rotation associated to the bending section that is less than 5% of the axial length of extension of the bending section and wherein the bending section has a length of extension along its associated axis of rotation that is at least four times bigger than the length of extension of the bending section in the direction that is perpendicular to its associated axis of rotation and perpendicular to the axial direction, wherein the joint section of the bending joint (1) is made from full material and wherein the bending joint (1) is fixed with its fastening section (15) to the axial damper (20) and with its mounting element (11) to the component.

14. Bending joint (1) for the use in a damping device (100) according to one of the claims 1 to 11, **characterized in that** the bending joint 1) has a fastening section (15) with which it can be mounted to one of the two connecting elements of the axial damper (20), wherein the bending joint (1) has a mounting element (11) for mounting on one of the components, wherein the bending joint (1) has a joint section that is a continuous rigidly interconnected component and that extends axially between the fastening section (15) and the mounting element (11), wherein the bending joint (1) can be resiliently bent in its joint section about at least one axis of rotation that is perpendicular to the axial direction. (A), wherein the joint section has at least one axial bending section (12, 14) that is associated to exactly one axis of rotation perpendicularly to the axial direction (A) and that remains rigid with respect to a bending stress that is exerted on itself by a relative force applied at its axial ends with a direction of force along its axis of rotation, wherein the bending section has a shape in the manner of a plate, the planar extension of which is fixed by the axial direction (A) and by the axis of rotation associated thereto, wherein the bending section has a length of extension in a direction perpendicular to the axial direction and perpendicular to the axis of rotation associated to the bending section that is less than 5% of the axial length of extension of the bending section and wherein the bending section has a length of extension along its associated axis of rotation that is at least four times bigger than the length of extension of the bending section in the direction that is perpendicular to its associated axis of rotation and perpendicular to the axial direction, wherein the joint section of the bending joint (1) is made from full material.

15. Method for mounting an axial damper (20) designed for damping relative movements in an axial direction (A) between two components between the two components, wherein an axial end of the bending joint (1) is fixed to an axial end of the axial damper (20), wherein the bending joint (1) has a bending section in which it can be resiliently bent about at least one axis of rotation that is perpendicular to the axial direction, wherein the joint section has at least one axial bending section (12, 14) that is associated to exactly one axis of rotation perpendicularly to the axial direction (A) and that remains rigid with respect to a bending stress that is exerted on itself by a relative force applied at its axial ends with a direction of force along its axis of rotation, wherein the bending section has a shape in the manner of a plate, the planar extension of which is fixed by the axial direction (A) and by the axis of rotation associated thereto, wherein the bending section has a length of extension in a direction perpendicular to the axial direction and perpendicular to the axis of rotation associated to the bending section that is less than 5% of the axial length of extension of the bending section and wherein the bending section has a length of extension along its associated axis of rotation that is at least four times bigger than the length of extension of the bending section in the direction that is perpendicular to its associated axis of rotation and perpendicular to the axial direction, wherein the joint section of the bending joint (1) is made from full material, wherein the other axial end of the bending joint (1) is fixed to one of the components.

## Revendications

1. Dispositif d'amortissement (100) pour le montage entre deux composants séparés pour l'amortissement d'oscillations entre les composants, le dispositif d'amortissement (100) présentant un amortisseur axial (20) comprenant un premier élément de raccord ainsi qu'un second élément de raccord, le premier élément de raccord étant relié au second élément de raccord par un tronçon d'amortissement en permettant un mouvement relatif axial des deux éléments de raccord l'un par rapport à l'autre, le tronçon d'amortissement étant configuré pour amortir le mouvement relatif axial entre les éléments de raccord, **caractérisé en ce que**
le dispositif d'amortissement (100) comprend une articulation de flexion (1) qui est fixée à l'un des éléments de raccord, l'articulation de flexion (1) présentant un élément de montage (11) pour le montage à l'un des composants, l'articulation de flexion (1) présentant une section d'articulation qui est configurée comme un composant continu rigide en soi et qui s'étend entre l'élément de raccord fixé à l'articulation de flexion (1) et l'élément de montage (11), l'articulation de flexion (1) étant flexible de manière élastique dans sa section d'articulation autour d'au moins un axe de rotation qui est perpendiculaire au sens axial, la section d'articulation présentant au moins une section axiale de flexion (12, 14) à laquelle exactement un axe de rotation est associé perpendiculairement au sens axial (A) et qui se comporte de manière rigide par rapport à un effort de flexion qui agit sur elle par une force relative appliquée à ses extrémités axiales avec un sens de l'effort le long de son axe de rotation, la section de flexion présentant une forme de type plaque dont l'extension en surface est fixée par le sens axial (A) et par l'axe de rotation qui lui est associé, la section de flexion présentant une longueur d'extension dans un sens perpendiculairement au sens axial et perpendiculairement à l'axe de rotation associé à la section de flexion qui est inférieure à 5% de la longueur d'extension axiale de la section de flexion et la section de flexion présentant une longueur d'extension le long de l'axe de rotation qui lui est associé qui est au moins le quadruple de la longueur d'extension de la section de flexion dans le sens qui est perpendiculaire à l'axe de rotation qui lui est associé et perpendiculaire au sens axial, la section d'articulation de l'articulation de flexion (1) étant en matériau plein.

2. Dispositif d'amortissement (100) selon la revendication 1, **caractérisé en ce que** l'amortisseur axial (20) et l'articulation de flexion (1) sont configurés comme des composants du dispositif d'amortissement (100) séparés l'un de l'autre, l'articulation de flexion (1) présentant une section de fixation (15) avec laquelle elle est fixée à l'élément de raccord.

3. Dispositif d'amortissement (100) selon l'une des revendications précédentes, **caractérisé en ce que** le dispositif d'amortissement (100) comprend une première articulation de flexion (1) qui est fixée au premier élément de raccord et une seconde articulation de flexion (1) qui est fixée au second élément de raccord.

4. Dispositif d'amortissement (100) selon l'une des revendications précédentes, **caractérisé en ce que** l'articulation de flexion (1) est configurée de telle manière qu'une flexion de l'articulation de flexion (1) a lieu, lors d'une sollicitation de l'élément de montage (11) par rapport à l'élément de raccord avec une force perpendiculairement au sens axial (A) et perpendiculairement à l'axe de rotation associé à la section de flexion (12, 14) exclusivement à l'intérieur de l'extension axiale de la section de flexion (12, 14).

5. Dispositif d'amortissement (100) selon l'une des revendications précédentes, **caractérisé en ce que** la section d'articulation présente une première section de flexion (12) et une seconde section de flexion (14) qui sont placées l'une derrière l'autre dans le sens axial (A), l'articulation de flexion (1) étant flexible dans sa première section de flexion (12) autour d'un premier axe de rotation qui est perpendiculaire au sens axial (A) et dans sa seconde section de flexion (14) autour d'un second axe de rotation qui est perpendiculaire au sens axial (A) et au premier axe de rotation.

6. Dispositif d'amortissement (100) selon la revendication 5, **caractérisé en ce qu'**une section intermédiaire rigide (13) qui relie les sections de flexion (12, 14) est prévue dans le sens axial (A) entre la première section de flexion (12) et la seconde section de flexion (14).

7. Dispositif d'amortissement (100) selon la revendication 6, **caractérisé en ce que** la section intermédiaire (13) présente, dans toutes les trois direction spatiales, une longueur d'extension qui est au moins le quadruple de la longueur d'extension respective des sections de flexion (12, 14) le long de la direction perpendiculairement au sens axial (A) et perpendiculairement à son axe de rotation respectif.

8. Dispositif d'amortissement (100) selon l'une des revendications précédentes, **caractérisé en ce que** la au moins une section de flexion (12, 14) est constituée par seulement un matériau, le matériau présentant, dans la section de flexion (12, 14), une épaisseur dans un sens perpendiculairement au sens axial (A) et perpendiculairement à l'axe de rotation associé à la section de flexion (12, 14) qui est inférieure à 5%, en particulier inférieure à 3% de la longueur d'extension axiale de l'articulation de flexion (1), en particulier inférieure à 5% de la longueur d'extension axiale de la section de flexion (12, 14) et/ou que la longueur d'extension de la au moins une section de flexion (12, 14) le long de l'axe de rotation qui lui est associé est au moins le double, en particulier au moins le quadruple de la longueur d'extension de la section de flexion (12, 14) perpendiculairement à l'axe de rotation qui lui est associé et perpendiculairement au sens axial (A).

9. Dispositif d'amortissement (100) selon l'une des revendications précédentes, caractérisé en que l'articulation de flexion (1) est fabriquée en une pièce en un seul matériau.

10. Dispositif d'amortissement (100) selon l'une des revendications précédentes, **caractérisé en ce que** l'articulation de flexion (1) présente une première bride avec laquelle elle est fixée au premier ou au second élément de raccord ainsi qu'une seconde bride qui forme l'élément de montage (11) de l'articulation de flexion (1).

11. Dispositif d'amortissement (100) selon l'une des revendications précédentes, **caractérisé en ce que** l'amortisseur axial (20) est configuré comme un amortisseur visqueux qui présente un bâti (21) et un piston (22), le piston (22) étant placé déplaçable axialement par rapport au bâti (21) à l'intérieur d'une plage de déplacement, cependant qu'un milieu visqueux (23, 25) est prévu dans le bâti (21), le piston (22) étant placé dans chaque position à l'intérieur de la plage de déplacement aussi bien avec une première section de piston axiale (221) à l'extérieur du bâti (21) et donc faisant saillie au-delà d'une première extrémité axiale du bâti (21) qu'avec une second section de piston axiale (222) à l'intérieur du bâti (21) et étant plongé par sections dans le milieu visqueux (23, 25), cependant que le premier élément de raccord est placé à la première extrémité axiale du piston (22) et le second élément de raccord à la seconde extrémité axiale du bâti (22).

12. Système comprenant au moins deux dispositifs d'amortissement (100) selon l'une des revendications précédentes, **caractérisé en ce que** le sens axial (A) d'un premier dispositif d'amortissement (100) forme, avec le sens axial (A) d'un second dispositif d'amortissement (100), un angle d'au moins 30°, en particulier de 60° à 120°.

13. Utilisation d'une articulation de flexion (1) qui présente une section de fixation (15), un élément de montage (11) espacé de la section de fixation (15) dans le sens axial (A) et une section d'articulation qui relie la section de fixation (15) à l'élément de montage (11), configurée comme un composant continu rigide en soi, la section d'articulation étant flexible de manière élastique autour d'au moins un axe de rotation perpendiculairement au sens axial (A), pour le montage d'un amortisseur axial (20) qui est configuré pour amortir des mouvements relatifs de deux composants l'un par rapport à l'autre dans le sens axial (A) sur l'un des composants, la section d'articulation de l'articulation de flexion (1) présentant au moins une section de flexion axiale (12, 14) à laquelle exactement un axe de rotation est associé perpendiculairement au sens axial (A) et qui se comporte de manière rigide par rapport à un effort de flexion qui agit sur elle par une force relative appliquée à ses extrémités axiales avec un sens de l'effort le long de son axe de rotation, la section de flexion présentant une forme de type plaque dont l'extension en surface est fixée par le sens axial (A) et par l'axe de rotation qui lui est associé, la section de flexion présentant une longueur d'extension dans un sens perpendiculairement au sens axial et perpendiculairement à l'axe de rotation associé à la section de flexion qui est inférieure à 5% de la longueur d'extension axiale de la section de flexion et la section de flexion présentant une longueur d'extension le long de l'axe de rotation qui lui est associé qui est au moins le quadruple de la longueur d'extension de la section de flexion dans le sens qui est perpendiculaire à l'axe de rotation qui lui est associé et perpendiculaire au sens axial, la section d'articulation de l'articulation de flexion (1) étant en matériau plein et l'articulation de flexion (1) étant fixée avec sa section de fixation (15) à l'amortisseur axial (20) et avec son élément de montage (1) au composant.

14. Articulation de flexion (1) pour l'utilisation dans un dispositif d'amortissement (100) selon l'une des revendications 1 à 11, **caractérisée en ce que** l'articulation de flexion (1) présente une section de fixation (15) par laquelle elle peut être montée à l'un des deux éléments de raccord de l'amortisseur axial (20), l'articulation de flexion (1) présentant un élément de montage (11) pour le montage à l'un des composants, l'articulation de flexion (1) présentant une section d'articulation qui est configurée comme un composant continu rigide en soi et qui s'étend axialement entre la section de fixation (15) et l'élément de montage (11), l'articulation de flexion (1) étant flexible de manière élastique dans sa section d'articulation autour d'au moins un axe de rotation qui est perpendiculaire au sens axial (A), la section d'articulation présentant au moins une section de flexion axiale (12, 14) à laquelle exactement un axe de rotation est associé perpendiculairement au sens axial (A) et qui se comporte de manière rigide par rapport à un effort de flexion qui agit sur elle par une force relative appliquée à ses extrémités axiales avec un sens de l'effort le long de son axe de rotation, la section de flexion présentant une forme de type plaque dont l'extension en surface est fixée par le sens axial (A) et par l'axe de rotation qui lui est associé, la section de flexion présentant une longueur d'extension dans un sens perpendiculairement au sens axial et perpendiculairement à l'axe de rotation associé à la section de flexion qui est inférieure à 5% de la longueur d'extension axiale de la section de flexion et la section de flexion présentant une longueur d'extension le long de l'axe de rotation qui lui est associé qui est au moins le quadruple de la longueur d'extension de la section de flexion dans le sens qui est perpendiculaire à l'axe de rotation qui lui est associé et perpendiculaire au sens axial, la section d'articulation de l'articulation de flexion (1) étant en matériau plein.

15. Procédé pour le montage d'un amortisseur axial (20) configuré entre deux composants pour l'amortissement de mouvements relatifs dans un sens axial (A) entre les deux composants, cependant qu'une extrémité axiale d'une articulation de flexion (1) est fixée à une extrémité axiale de l'amortisseur axial (20), articulation qui présente une section d'articulation qui est flexible de manière élastique autour d'au moins un axe de rotation qui est perpendiculaire au sens axial, la section d'articulation présentant au moins une section de flexion axiale (12, 14) à laquelle exactement un axe de rotation est associé perpendiculairement au sens axial (A) et qui se comporte de manière rigide par rapport à un effort de flexion qui agit sur elle par une force relative appliquée à ses extrémités axiales avec un sens de l'effort le long de son axe de rotation, la section de flexion présentant une forme de type plaque dont l'extension en surface est fixée par le sens axial (A) et par l'axe de rotation qui lui est associé, la section de flexion présentant une longueur d'extension dans un sens perpendiculairement au sens axial et perpendiculairement à l'axe de rotation associé à la section de flexion qui est inférieure à 5% de la longueur d'extension axiale de la section de flexion et la section de flexion présentant une longueur d'extension le long de l'axe de rotation qui lui est associé qui est au moins le quadruple de la longueur d'extension de la section de flexion dans le sens qui est perpendiculaire à l'axe de rotation qui lui est associé et perpendiculaire au sens axial, la section d'articulation de l'articulation de flexion (1) étant en matériau plein, l'autre extrémité axiale de l'articulation de flexion (1) étant fixée à l'un des composants.
